(19) **Europäisches Patentamt / European Patent Office / Office européen des brevets**

(11) **EP 1 392 414 B1**

(12) **EUROPEAN PATENT SPECIFICATION**

(45) Date of publication and mention
of the grant of the patent:
**31.03.2010 Bulletin 2010/13**

(21) Application number: **02723863.3**

(22) Date of filing: **29.04.2002**

(51) Int Cl.:
**B01D 53/04** (2006.01)     **B01J 19/00** (2006.01)

(86) International application number:
**PCT/US2002/011860**

(87) International publication number:
**WO 2002/087729 (07.11.2002 Gazette 2002/45)**

(54) **APPARATUS AND METHOD FOR SEPARATION/PURIFICATION OF FLUIDS UTILIZING RAPIDLY CYCLED THERMAL SWING SORPTION**

SCHNELL ZYKLISCHES TEMPERATURWECHSEL-SORPTIONSVERFAHREN UND DESSEN VORRICHTUNG ZUR TRENNUNG/REINIGUNG VON FLUIDEN

APPAREIL ET PROCEDE DE SEPARATION / DE PURIFICATION DE FLUIDES UTILISANT UN CHANGEMENT THERMIQUE A CYCLE RAPIDE

(84) Designated Contracting States:
**AT BE CH CY DE DK ES FI FR GB GR IE IT LI LU MC NL PT SE TR**

(30) Priority: **30.04.2001  US 845778**
**30.04.2001  US 845777**

(43) Date of publication of application:
**03.03.2004  Bulletin 2004/10**

(73) Proprietor: **BATTELLE MEMORIAL INSTITUTE Columbus, OH 43201-2693 (US)**

(72) Inventors:
• **TONKOVICH, Anna Lee, Y.**
  **Marysville, OH 43040 (US)**
• **MONZYK, Bruce, F.**
  **Delaware, OH 43015 (US)**
• **WANG, Yong**
  **Richland, WA 99352 (US)**
• **VANDERWIEL, David, P.**
  **Columbus, OH 43212 (US)**
• **PERRY, Steven, T.**
  **Galloway, OH 43119 (US)**
• **FITZGERALD, Sean, P.**
  **Columbus, OH 43221 (US)**
• **SIMMONS, Wayne, W.**
  **Dublin, OH 43017 (US)**
• **MCDANIEL, Jeffrey, S.**
  **Columbus, OH 43214 (US)**
• **WELLER Jr., Albert, E.**
  **Columbus, OH 43212 (US)**
• **CUCKSEY, Chad, M.**
  **Columbus, OH 43212 (US)**

(74) Representative: **Zeuner, Stefan et al**
**Zeuner & Summerer**
**Hedwigstrasse 9**
**80636 München (DE)**

(56) References cited:
**WO-A-01/12312     WO-A1-00/75950**
**WO-A1-01/03812     DE-A- 19 825 102**
**US-A- 5 750 026     US-A- 6 126 723**
**US-B1- 6 293 998**

**Description**

FIELD OF THE INVENTION

The present invention relates to methods and apparatus for separation by thermally cycled sorption and desorption. The present invention also relates to hydrogen separation by thermally cycled sorption and desorption and to an apparatus containing hydrogen sorbents.

INTRODUCTION

Separation of fluid components from fluid mixtures has been a topic of great scientific and economic interest for more than 100 years. This invention concerns methods and apparatus for separating fluid components from fluid mixtures by thermally cycled sorption and desorption. Our experimental work, and much of the following descriptions, concern separating hydrogen gas. In its broader aspects, however, this invention is applicable to any fluid, either gaseous or liquid including supercritical fluids.

Purified hydrogen has long been and continues to be used in a variety of industrial processes. For example, petroleum refineries are using increasing quantities of hydrogen to meet regulatory requirements on diesel, gasoline, and other petroleum products. Hydrogen-based treating processes are expected to grow substantially because fuel regulations in North America, Europe, and other regions are becoming increasing stringent. For example, the sulfur levels in U.S. diesel fuels must decrease from the current level of 250 ppm to 15 ppm by 2007. While several options exist for lowering sulfur levels, all of commercially available processes require a hydrogen input stream.

Another major use of hydrogen is in upgrading crude oil to make gasoline. To meet the world's increasing demand for gasoline, it has been necessary to develop poorer grades of crude oil that are denser and require hydrogenation for upgrading to gasoline.

Additionally, for more than 10 years there have been intense research and development efforts directed toward hydrogen as a clean power source for fuel cells. Compared to conventional power systems, hydrogen-powered fuel cells are more energy efficient, more robust, and less polluting. Fuel cells can totally eliminate ozone and nitrogen oxides, the most noxious precusors of smog. However, problems such as excessive cost, equipment size, and process complexity have prevented hydrogen-based fuel cell technology from replacing most conventional power sources.

Document US 6 126 723 discloses a microcomponent assembly for efficient contacting of fluid containing a porous contactor having a thickness and a plurality of pores extending through the thickness. Document WO 01/12312 A2 refers to chemical reactors and reaction chambers and methods for conducting catalytic chemical reactions having gas phase reactants. The reaction chambers and methods include in preferred embodiments at least one porous catalyst that has pore sizes large enough to permit molecular diffusion within the porous catalyst material. WO 00/75950 A1 teaches composite materials capable of hydrogen sorption, and WO 01/03812 A1 discloses a gas purification system with an integrated hydrogen sorption and filter assembly.

Document US 5 750 026 discloses a device for removal of contaminants from fluid streams using a monolithic porous filter commonly known as a honeycomb. The honeycomb is made of a plurality of small channels that are coated with a layer of activated carbon. A portion of the small channels are plugged at the inlet face and the remaining portion of small channels are plugged at the outlet face. The plugs prevent flow straight through each small channel, and flow is forced through the channel walls. This device can be heated by means of an electrical current to drive off contaminants captured in the activated carbon, and thus the device can be regenerated.

The present invention provides apparatus and methods for separating fluids. The invention can be used, for example, to purify hydrogen formed in a steam-reforming reaction (typically a gas containing hydrogen, carbon monoxide and carbon dioxide). Compared to conventional fluid separation technology, many of the configurations and procedures of this invention are relatively simple, scaleable over a broad range, including small, and are amenable to cost-effective mass production.

SUMMARY OF THE INVENTION

In a first aspect, the invention provides a method of separating a fluid component from a fluid mixture including at least two steps. In the first step, a fluid mixture passes into a flow channel at a first temperature. The flow channel comprises a sorbent within the channel, and flow through the flow channel is constrained such that in at least one cross-sectional area of the channel, the height of the flow channel is 1 cm or less. Heat from the sorbent is transferred to a microchannel heat exchanger. The fluid mixture contacts the sorbent without passing through a contactor. Then, in a second step, energy is added and the temperature of the sorbent is increased. A fluid component is desorbed from the sorbent at a second temperature and a fluid component that was sorbed in the first step is obtained. The second temperature is higher than the first temperature.

In a second aspect, the invention provides another method of separating a fluid component from a fluid mixture that includes at least two steps. In a first step, a gas mixture passes into a flow channel at a first temperature. The flow channel comprises a sorbent within the channel, and flow through the channel is constrained such that in at least one cross-sectional area of the channel, the height of the flow channel is 1 cm or less. Then, in a second step, energy from an energy source is added and the temperature of the sorbent is increased. A fluid component is desorbed at a second temperature and a fluid component that was sorbed in the first step is obtained. The second temperature is higher than the first temperature. The first and second steps, combined, for a non-condensed fluid mixture (i.e., a gaseous or supercritical fluid) take 10 seconds or less and wherein at least 20% of the gaseous component sorbed in the first step is desorbed from the sorbent; or for a liquid mixture take 1000 seconds or less and wherein at least 20% of the fluid component sorbed in the first step is desorbed from the sorbent.

In a third aspect, the invention provides another method for separating a fluid component from a fluid mixture. In this method, a fluid mixture passes into a first sorption region at a first temperature and first pressure, wherein the first sorption region comprises a first sorbent and wherein the temperature and pressure in the first sorption region are selected to favor sorption of the fluid component into the first sorbent in the first sorption region. Heat from the first sorption region is transferred into a microchannel heat exchanger. A fluid component from said fluid mixture is selectively sorbed, thus resulting in a sorbed component in the first sorbent and a fluid mixture that is relatively depleted in said component. The relatively component-depleted fluid mixture is passed into a second sorption region at a second temperature and second pressure, wherein the second sorption region comprises a second sorbent and wherein the temperature and pressure in the second sorption region are selected to favor sorption of the fluid component into the sorbent in the second sorption region. Heat transfers from the second sorption region into a microchannel heat exchanger. The fluid component is selectively sorbed from said relatively component-depleted fluid mixture thus resulting in sorbed component in the second sorbent and a relatively more component-depleted gas mixture. The second temperature is different than the first temperature. Heat is added to the first sorbent, through a distance of about 1 cm or less to substantially the entire first sorbent, to raise the first sorbent to a third temperature and the component is desorbed from the first sorbent. Heat is added to the second sorbent, through a distance of about 1 cm or less to substantially the entire second sorbent, to raise the second sorbent to a fourth temperature and the component is desorbed from the second sorbent; and the component desorbed from the first and second sorbents is obtained.

In a fourth aspect, the invention provides a fluid separation apparatus that includes: a flow channel comprising a porous sorbent, the flow channel having at least one dimension of 1 cm or less, wherein, in at least one cross-section of the flow channel the porous sorbent occupies at least 90% of the cross-sectional area; and a microchannel heat exchanger in thermal contact with the flow channel. The invention also provides a use of this apparatus to purify a fluid component from a fluid mixture.

In a fifth aspect, the invention provides a fluid separation apparatus including:

a first array of flow channels, a second array of flow channels, at least one fluid conduit connecting the outlet of the first array to the inlet of the second array; and a valve capable of controlling the flow through the fluid conduit. The first array of flow channels includes: at least two flow channels, each of which includes an inlet, an outlet and a sorbent disposed between the inlet and the outlet. Each of the at least two flow channels are in thermal contact with a microchannel heat exchanger and have at least one dimension of 1 cm or less. This dimension is in a direction toward a microchannel heat exchanger. The first array also includes at least one array inlet and at least one array outlet. The second array of flow channels includes: at least two flow channels, each of which includes an inlet, an outlet and a sorbent disposed between the inlet and the outlet. Each of the at least two flow channels are in thermal contact with a microchannel heat exchanger and have at least one dimension of 1 cm or less. This dimension is in a direction toward a microchannel heat exchanger. The second array also includes at least one array inlet and at least one array outlet. The invention also includes a method of using this apparatus in which a fluid component is sorbed in the first array, and, simultaneously, a fluid component in the second array is desorbed.

In a sixth aspect, the invention provides a method of separating hydrogen gas. In this method, a hydrogen-containing gas mixture passes into a channel at a first temperature. This channel includes a sorbent within the channel that has a surface exposed to the gas. Flow through the channel is constrained such that in at least one cross-sectional area of the channel, the furthest distance to a channel wall is 0.5 cm or less. The sorption, at this first temperature, occurs at a rate of at least 0.1 mol of $H_2$/(second)($cm^3$ of sorbent), where the volume of sorbent is the volume of sorbent used in the method and where the rate is averaged over the sorption phase of each cycle and the "first temperature" is the average temperature of the sorbent (measured, for a film, at the interface of the sorbent film and the surface of the flow channel or, for a porous sorbent, within a porous sorbent) during the sorption phase. Then, energy is added to the sorbent to increase temperature of the sorbent to a second temperature that is higher than the first temperature. At the second temperature, hydrogen is desorbed and hydrogen gas is obtained. The "second temperature" is the average temperature of the sorbent (measured as above) during the desorption phase.

In a seventh aspect, the invention provides a method of separating hydrogen gas that includes a first step of sorbing hydrogen gas. In this first step, a hydrogen-containing gas mixture is passed into a channel at a first temperature. This channel includes a sorbent within the channel that has a surface exposed to the gas. In a second step, energy is added to the sorbent to increase temperature of the sorbent to a temperature that is higher than the first temperature. Then, in a third step hydrogen gas desorbs at a second temperature that is higher than the first temperature and hydrogen gas is obtained. In this method, the second and third steps, combined, take 10 seconds or less and at least 20% of the hydrogen sorbed in the first step is desorbed from the sorbent.

In an eight aspect, the invention provides a method of separating hydrogen gas from a gas mixture, in which, in a first step, at a first temperature, a hydrogen-containing gas mixture contacts a sorbent that sorbs hydrogen. This sorbent includes a layer of Pd or Pd alloy overlying a hydrogen sorbent. Then subsequently, in a second step, energy is added to the sorbent, thus bringing the sorbent to a second temperature that is at least 5 °C higher than the first temperature and hydrogen desorbs from the sorbent. The desorbed hydrogen obtained is in a higher purity form than the feed gas mixture.

In a ninth aspect, the invention provides a method for separating hydrogen from a gas mixture, wherein a hydrogen-containing gas mixture is passed into a first sorption region at a first temperature and first pressure, wherein the first sorption region comprises a first sorbent and wherein the sorbent temperature and pressure in the first sorption region are selected to favor sorption of hydrogen into the first sorbent in the first sorption region. Hydrogen is selectively removed from the gas mixture resulting in sorbed hydrogen in the first sorbent and a relatively hydrogen-depleted gas mixture. The relatively hydrogen-depleted gas mixture passes into a second sorption region at a second temperature and second pressure. The second sorption region comprises a second sorbent, and the temperature and pressure in the second sorption region are selected to favor sorption of hydrogen into the sorbent in the second sorption region. Hydrogen is selectively removed from the relatively hydrogen-depleted gas mixture resulting in sorbed hydrogen in the second sorbent and a relatively more hydrogen-depleted gas mixture. The second temperature is different than the first temperature. Heat is added to the first sorbent, through a distance of about 1 cm or less to substantially the entire first sorbent, to raise the first sorbent to a third temperature and hydrogen desorbs from the first sorbent. Heat is added to the second sorbent, through a distance of about 1 cm or less to substantially the entire second sorbent, to raise the second sorbent to a fourth temperature, and hydrogen desorbs from the second sorbent. Hydrogen desorbed from the first and second sorbents is obtained. The amount of hydrogen obtained from the first and second sorbents is greater than the amount that would have been obtained by operating the first and second sorbents at the same temperature, given the same total amount of added heat. Although this fourth aspect of the invention is generally applicable, it is preferred to locate the sorbent in a channel having a dimension of one cm or less that is in thermal contact with a heat exchanger to achieve rapid and efficient thermal transport.

The invention also provides a hydrogen separation apparatus in which a flow channel having an internal surface that comprises palladium (which includes a palladium alloy) on at least a portion of the internal surface. The flow channel has at least one dimension of 1 cm or less, and a heat exchanger is in thermal contact with the flow channel.

The invention further provides a hydrogen separation apparatus in which a flow channel includes an inlet, an outlet and a sorbent disposed between the inlet and the outlet. The sorbent comprises a hydrogen sorbent having a surface coating over more than 90% of the surface of the hydrogen sorbent, wherein the surface coating comprises palladium. A heat exchanger is in thermal contact with the sorbent.

In yet another aspect, the invention provides a hydrogen separation apparatus containing a flow channel with a thin film of a hydrogen sorbent. Because the film is so thin, it adheres to the apparatus even after multiple sorption/desorption cycles - conditions in which conventional hydrogen sorbents (such as nickel) would crumble.

Any of the apparatus described herein can be used to separate hydrogen from a hydrogen-containing gas mixture. The invention includes this apparatus and methods using any of the apparatus described herein to separate hydrogen.

The low pressure changes involved in the temperature swing sorption (TSS) process of the invention allow very thin metal shim and foil construction, hence, allowing very low metal mass and therefore very fast cycle times. Thin-walled construction also allows high surface area per volume of TSS device, thereby producing high rates of productivity per unit volume of equipment, thereby providing a high productivity rate needed for industrial scale processing. Also, an important facet of the invention is that the high surface area per unit volume (SA/V) feature of the hardware allows the sorbent to be deposited within the device in a high surface area, thin film fashion. Hence, the sorbed species, e.g., the hydride in the case of hydrogen separation, once formed on the surface of the sorbent, does not need to migrate far to fully load the sorbent internal solid volume, which, in comparison, would be a slow process in thick, conventional sorbent beds containing coarse particles to reduce pressure drop across the bed. For example, when performing hydrogen separation at these conditions, Pd loads very little hydrogen, and the thin metal film/foil/shim can be fully loaded with hydride quickly due to the short diffusion distances. More generally, a benefit to the above TSS design is that, since only very thin sorbent layers are needed, and can optionally be cycled rapidly, sorbent material normally considered too costly, such as Pd, can be used.

Although the ability of palladium to selectively sorb large volumes of hydrogen has been long known, we have surprisingly discovered that a fast rate of sorption and desorption occurs for hydrogen, in properly constructed apparatus or properly conducted methods, allows rapid thermal cycling to efficiently separate relatively large volumes of hydrogen gas (henceforth just hydrogen) with relatively small hardware volumes.

Numerous advantages are provided by various embodiments of the present invention including: reduced cost, reduced volume of separation hardware, durability, stability, separation speed, ability to separate large volumes of fluid components with a small volume of equipment, improved energy efficiency and reduced cost relative to packed bed or membrane technology.

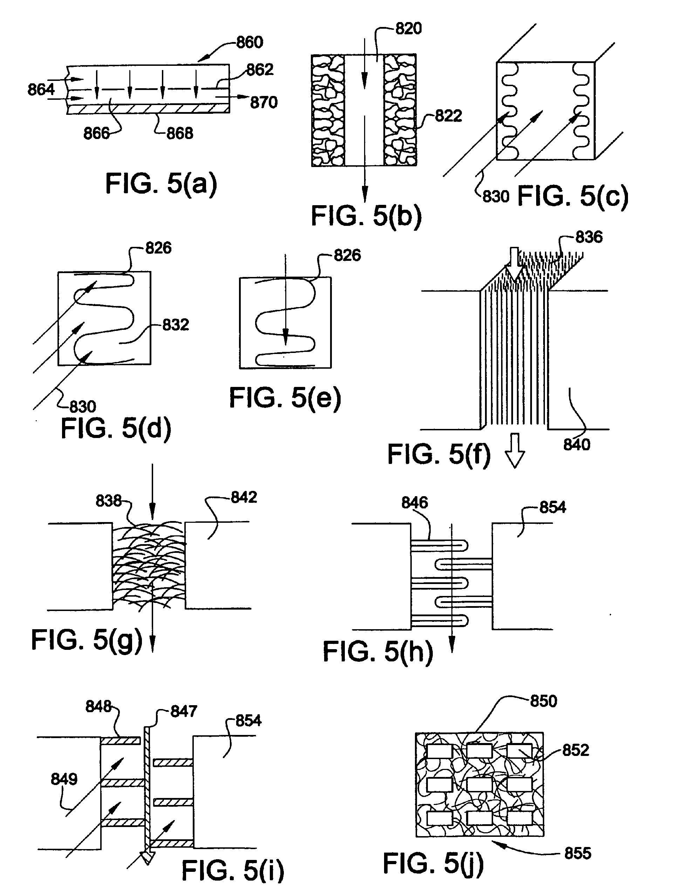

The invention includes apparatus having any of the configurations indicated in the figures. However, these specific configurations are not the only means to carry out the invention and, therefore, should not be interpreted as limiting the inventive apparatus or methods. The invention also includes methods in which a fluid mixture passes through any of the illustrated apparatus. For example, with reference to Fig. 5a, the invention includes a method in which a fluid mixture flows through a flow distribution sheet and the distributed flow passes into a sorbent-containing compartment.

GLOSSARY

"Hardware volume" means the external volume of the separator apparatus including the sum of all parts if the apparatus is not integrated in a single unit.

"Internal surface" refers to any surface in the interior of the flow channel that is exposed to flowing fluid, for example, gas. Internal surface may be measured by appropriate techniques such as optical measurement or $N_2$ adsorption.

"Sorption / desorption" refers to the total amount of gas taken in without regard to the mechanism by which the fluid, for example, gas, is taken in. In other words, "sorption" is the sum of adsorption and absorption.

The term " fluid mixture" means a fluid mixture containing between 1 and 999,999 parts per million (ppm) of a first component and at least one ppm of a component other than the first component. For example, the term " hydrogen-containing gas mixture" means a gas mixture containing between 1 and 999,999 parts per million (ppm) hydrogen (including its isotopes) and at least one ppm of a gas other than hydrogen or its isotopes.

The term "component" refers to a molecular species. It should be understood that any of the methods described herein could separate (for example, sorb) more than one component; but the sorption step selectively partitions components, that is, a sorption step either increases or decreases the relative amount of a selected component in the gas mixture.

Occasionally, the specification uses the term "solute." This term means component. The term "solute" does not require that component to be present in less than 50% by volume or mass.

The term "hydrogen" as it is used throughout the specification includes hydrogen and all its isotopes.

The term "obtaining" means that the component, for example, hydrogen, is recovered either for storage or for use in a subsequent chemical process such as combustion, fuel cell operation, chemical synthesis, etc. The term "obtaining" does not mean, however, that the component, for example, hydrogen, is used simply as a refrigerant.

The term "heat exchanger" means a component, or combination of components, that is capable of adding and removing heat. Preferred examples of heat exchangers include microchannels that can be switched from hot to cold fluids, electrical resistors in combination with a heat sink, and thermoelectric materials.

"TSA" is thermal swing adsorption.

A "porous contactor" is a porous or perforated material through which flow occurs to reach a sorbent.

BRIEF DESCRIPTION OF THE DRAWINGS

FIG. 1 is a schematic cross-sectional representation of a flow channel and heat exchanger.

FIG. 2 is a schematic representation of fluid sorption apparatus including valves (darkened circles).

FIG. 3 is a schematic cross-sectional representation of a flow channel and heat exchanger. The sorbent is disposed on the flow channel walls.

FIG. 4a is a schematic cross-sectional representation of a flow channel and heat exchanger.

Fig. 4b is a schematic cross-sectional representation of a flow channel containing a porous sorbent and a flow path for convective flow adjacent to the sorbent.

Fig. 4c is a schematic cross-sectional representation of a flow channel filled with a porous sorbent. The sorbent is disposed in the flow channel such that flow is substantially through the sorbent.

FIG. 5 illustrates cross-sectional schematic views of sorption chamber configurations including (a) a flow distribution sheet that distributes flow into a sorbent-containing compartment; (b) a bulk flow channel disposed between porous sorbent layers; (c) dual corrugated sorbent; (d) corrugated sorbent with gas flow over the sorbent surface; (e) corrugated sorbent with gas flow through the sorbent; (f) wires of sorbent material; (g) fibers; (h) baffles having coatings of porous sorbent material; (i) baffles composed of porous sorbent material; and (j) a porous matrix with bulk flow channels.

FIG. 6 illustrates schematic views of sorbent chamber configurations including (a) a perspective view of sorbent channels with cross flow of a heat exchange fluid; (b) a cross-sectional view of a porous sorbent material that does not directly contact the walls of the chamber; (c) top - a chamber with a porous plug, and bottom - multiple flow channels with a mixing chamber; (d) a u-shaped channel filled with porous sorbent material; (e) porous dividers; and (f) mixing streams that are directed to flow between layers of porous sorbent material.

FIG. 7 is a schematic cross-sectional representation of a flow channel and heat exchanger.

FIG. 8 schematically illustrates a multistage sorption apparatus in which multiple flow channels are utilized in each stage.

FIGs. 9a-9c schematically illustrate a 3-stage sorption process.

FIGs. 10a and 10b are plots of hydrogen desorption.

FIG. 11 schematically illustrates a 2 stage sorption process. The open circles represent valves that control the flow of the heat exchange fluids. The darkened circles represent valves that control flow of product fluids.

FIG. 12 schematically illustrates a microchannel device that can function as a stage in a sorption process. The criss-crossed areas indicate a porous sorbent and the open lines represent heat exchanger channels.

## THEORY OF THERMAL SWING SORPTION IN MICROCHEMICAL SYSTEMS

The use of a microchannel architecture has distinct advantages for sorption based separation and purification processes. In particular for thermal swing based sorption, the ability to rapidly heat and cool systems enables more effective use of the sorbent bed. In addition, the form of an engineered sorbent can reduce mass transfer resistance.

## Mass transfer time comparison

For unsteady-state mass transfer, the time for a solute to diffuse through a porous matrix is defined in (1).

$$\tau = \frac{x^2}{D_e} \qquad\qquad (1)$$

Where $\tau$ equals the time required to diffuse a distance x, and x is the distance over which diffusion occurs, and $D_e$ is the effective diffusivity for a solute in solution within a porous matrix. The effective diffusivity is defined as the molecular diffusivity ($D_a$) divided by a tortuosity factor for a specific porous geometry. For pores that are roughly straight, the tortuosity factor approaches unity. For pores that are non-straight and meander through a solid matrix, the tortuosity factor may be on the order of 10.

The value of the molecular diffusivity varies as a function of both the solute and the solution at varying temperatures and pressures. Typical values of molecular diffusivities ($D_a$) for gas phase solutes in a gaseous solution range from 0.1 to 0.01 $cm^2/s$. Typical values for molecular diffusivities ($D_a$) for liquid phase solutes in a liquid phase solution range from $10^{-4}$ to $10^{-5}$ $cm^2/s$. The tortuosity factor varies greatly as a function of the tortuous nature of pores within porous pellets or substrates. For the purposes of comparing microchannel systems with conventional, a common tortuosity value is selected of 3.

For a cylindrical or spherical pellet, the diffusion distance x, is half the pellet diameter ($d_{pellet}$). A typical dimension for a pellet used in a conventional sorption system is on the order of 1 cm. The typical time required for gas phase diffusion of the solutes within the porous pellet is defined by (2-3).

$$\tau_{pellet} = \frac{x^2}{D_e} = \frac{\dfrac{d_{pellet}^2}{4}}{\dfrac{0.1 - 0.01 cm^2/s}{3}} \quad \sim \quad 7.5 \text{ to } 75 \text{ seconds for a gas phase solution} \qquad (2)$$

$$\tau_{pellet} = \frac{x^2}{D_e} = \frac{\dfrac{d_{pellet}^2}{4}}{\dfrac{10^{-4} - 10^{-5} cm^2/s}{3}} \sim 7500 \text{ to } 75000 \text{ seconds for a liquid phase solution}$$

$$(3)$$

Because the time for diffusion varies as a function of the square of the distance, decreasing the diffusion distance plays a disproportionate role in reducing the time required for diffusion. In conventional sorption technology, smaller pellets may be used, but at the expense of the overall system pressure drop. Bulk flow travels through the interstices between the randomly packed pellets. As the size of the pellet is reduced, the size of the interstices is also reduced, thus giving a greater net pressure drop for an equal size bed length.

The diffusion path length for a microchemical based sorption system is considerably smaller than conventional technology. The maximum thickness or diffusion distance for an engineered sorbent in a microchannel is about 2 mm. Preferably, the thickness of the engineered sorbent (for example a sorbent coated on a metal foam) is less than 1 mm, more preferably closer to 0.25 mm. The actual thickness of an engineered sorbent can be set through an optimization of opposing variables. Thicker engineered sorbents will have more sorbent volume (active sites for sorption) and thus a higher capacity. However, thicker engineered sorbents will also have a longer mass transfer and heat transfer time. The characteristic time for mass transfer in a microchannel based engineered sorbent is defined in (4-5).

$$\tau_{eng\text{-}sorbent} = \frac{x^2}{D_e} = \frac{0.025^2 cm^2}{\dfrac{0.1 - 0.01 cm^2/s}{3}} \sim 0.02 \text{ to } 0.2 \text{ seconds for a gas phase solution} \quad (4)$$

$$\tau_{eng\text{-}sorbent} = \frac{x^2}{D_e} = \frac{0.025^2 cm^2}{\dfrac{10^{-4} - 10^{-5} cm^2/s}{3}} \sim 20 \text{ to } 200 \text{ seconds for a liquid phase solution}$$

$$(5)$$

The mass transfer time for a sorbate in an engineered sorbent housed within a microchannel is on the order of 100 to 1000 times shorter than in a conventional sorbent pellet for both gaseous and liquid phase separations. The actual values for mass transfer times will vary with the actual values of molecular diffusivities, tortuosity factors, and actual distance for mass transfer within a pellet or engineered sorbate.

Heat transfer time comparison

The characteristic time for heat transfer may be a function of either conduction through the medium that separates the heat transfer fluid and through the sorbent, or the time may be a function of the time required for convection heat transfer to occur between the heat transfer fluid and the separating medium or wall.

For the case of convection-limited heat transfer, the lumped parameter method is appropriate for predicting characteristic times for heat transfer. This method is appropriate when the Biot (Bi) number is less than 0.1. The Biot number is defined by (6).

$$Bi = \frac{h(\frac{V}{A})}{k} \qquad\qquad (6)$$

Where h equals the convective heat transfer coefficient, V equals the volume through which heat transfer is occurring, A is defined by the surface area in the plane of and normal to heat transfer, and k is the thermal conductivity of the material.

The value of the convective heat transfer coefficient (h) in a microchannel as empirically measured for a gaseous heat transfer fluid typically varies from 200 to 2000 W/m$^2$-K. The value for a liquid heat transfer fluid in a microchannel typically range from 10,000 to 30,000 W/m$^2$-K. Values for convective heat transfer coefficients in conventional sized heat exchange systems are typically at least one order of magnitude smaller for both gaseous and liquid heat transfer fluids respectively.

The value for the thermal conductivity (k) is well defined for most metals, and can be measured for the porous sorbents. For the purposes of comparing a microchannel based system to a conventional sorption system, typical values are selected for k. Assuming aluminum as a material of construction, the thermal conductivity of the metal is roughly 220 W/m-K. An aluminum foam is selected as a typical engineered sorbent substrate, and an estimated effective thermal conductivity is defined as roughly 10 W/m-K. Ceramic-based pellets used as substrates in conventional sorbent systems will have a slightly lower effective thermal conductivity that is closer to 2 W/m-K.

The value for V/A in a microchannel-based system is easily calculated based on the typical rectilinear geometry where V equals Height x Length x Width and A equals Height x Length. The resulting value of V/A is reduced to the Width, which is the critical thickness through which heat must be transferred to and from the heat exchanger and sorbent.

For a cylindrical tube that is typical for housing a conventional fixed bed of sorbent pellets, the value of V/A is reduced to the tube diameter divided by 4. The volume is defined as $\pi$ x diameter squared/4 x Length. The area A for heat transfer is pi x tube diameter x Length.

The resulting Biot number calculations for a gaseous heat transfer fluid are shown in equations (7-9).

Microchannel system (h is in units of W/m$^2$/K, k is in units of W/m/K, V/A is in units of m and both typical web and engineered (i.e., porous) sorbent assumed to have a thickness of 0.25 mm)

$$\text{Bi}_{\text{web}} = \frac{h\left(\frac{V}{A}\right)}{k} = \frac{1000(0.00025)}{220} = 0.0011 \tag{7}$$

$$\text{Bi}_{\text{eng-sorbent}} = \frac{h\left(\frac{V}{A}\right)}{k} = \frac{1000(0.00025)}{10} = 0.025 \tag{8}$$

Conventional system (same units for h, k, and V/A, and typical bed diameter is at least 10 cm)

$$\text{Bi}_{\text{conventional}} = \frac{h\left(\frac{V}{A}\right)}{k} = \frac{100(0.025)}{2} = 1.25 \tag{9}$$

Thus for the case of a gaseous heat transfer fluid, the characteristic time for heat transfer in a microchannel system is dominated by convection resistance and for a conventional sorption system, the characteristic heat transfer time is dominated by conduction resistance.

When a liquid is used as the heat transfer fluid, the convective heat transfer coefficient is raised by roughly an order of magnitude. In this regime, the Biot number for heat transfer through the engineered sorbent exceeds 0.1, and thus the characteristic time for heat transfer in a microchannel-based sorption device is dominated by conduction resistance rather than convection resistance. For conventional systems, the Biot number will only get larger and the dominating heat transfer resistance remains conduction.

For the lumped parameter analysis, the characteristic time for heat transfer is defined by equations (10-13). In these equations, T is the actual temperature as a function of time, $T_{ss}$ is the steady state temperature, and T0 is the starting temperature at time equal to 0, or at the start of a cycle.

$$\frac{T-T_{ss}}{T0-T_{ss}} = \exp(-Bi * Fo) \tag{10}$$

$$Fo = \frac{\alpha t}{(\frac{V}{A})^2} \tag{11}$$

$$\alpha = \frac{k}{\rho C_p} \tag{12}$$

Rearranging for the characteristic heat transfer time, t is defined in equation 13.

$$t = \frac{(\frac{V}{A})^2(-\ln(\frac{T-T_{ss}}{T0-T_{ss}}))}{\alpha Bi} \tag{13}$$

The value of $\alpha$ for an aluminum web at ambient conditions is roughly $9 \times 10^{-5}$ m$^2$/s. The value of $\alpha$ for an aluminum foam is roughly $4 \times 10^{-5}$ m$^2$/s.

Solving for the time required for the temperature within the wall to reach 95% of the temperature of the heat transfer fluid is shown in equation (14).

$$t = \frac{(0.00025m)^2(-\ln(0.05))}{9x10^{-5}\frac{m^2}{s}0.0011} = 1.9 \text{ sec} \tag{14}$$

Solving for the time required within the engineered sorbent to reach 95% of the temperature of the heat transfer fluid is shown in equation (15).

$$t = \frac{(0.00025m)^2(-\ln(0.05))}{4x10^{-5}\frac{m^2}{s}0.025} = 0.19 \text{ sec} \tag{15}$$

The total time for the temperature within the engineered sorbent to reach 95% of the initial temperature of the heat transfer fluid is about 2 sec.

If the temperature of the heat transfer fluid is maintained at a much higher temperature than the desired sorption or desorption temperature, then the characteristic time for heat transfer will be considerably shorter. As an example, if only 10% of steady-state is desired, then the characteristic times for heat transfer will be reduced by a factor of 28. An example calculation is shown in equation (16).

$$t = \frac{(0.00025m)^2(-\ln(.9))}{9x10^{-5}\frac{m^2}{s}0.0011} = 0.07 \text{ sec} \tag{16}$$

The additional time for heat transfer through the engineered sorbent will be 0.007 sec. The characteristic time for heat transfer in the conduction-resistance dominated regime is defined by equation (17).

$$t = factor\frac{x^2}{\alpha} \tag{17}$$

The *factor* is determined from empirical heat transfer curves and defined for different geometric shapes. For a cylinder of infinite length (e.g., length much longer than diameter) and a desired temperature approach of 95% of steady-state, the factor equals 0.6.

For a packed bed of ceramic sorption pellets, the value of $\alpha$ is approximately 1.3 x $10^{-6}$ $m^2$/s. Solving for the characteristic heat transfer time for a conventional sorption bed is defined by equation (18).

$$t = 0.6\frac{0.05^2 m^2}{1.3x10^{-6}\frac{m^2}{s}} = 1150 \text{ sec} \tag{18}$$

If an approach of 95% of steady-state is not required and the device is operated to only within 10% of steady-state, then the characteristic time is defined by equation (19).

$$t = 0.1\frac{0.05^2 m^2}{1.3x10^{-6}\frac{m^2}{s}} = 192 \text{ sec} \tag{19}$$

For the microchannel-based sorption system that is dominated by conduction resistance not convection resistance (e.g., a liquid heat transfer fluid not a gaseous heat transfer fluid), then the characteristic time for heat transfer is defined by equation (20) when a 95% approach to equilibrium is desired. If a less restrictive approach to equilibrium is required, then the characteristic time for heat transfer will be even shorter.

$$t = 1.3\frac{0.00025^2 m^2}{4x10^{-5}\frac{m^2}{s}} = 0.002 \text{ sec} \tag{20}$$

Comparison between microchannel-based sorption device and conventional sorption hardware

The characteristic time for heat transfer in a microchannel-based sorption device is typically 100 to more than 1000 times shorter than a conventional packed bed sorption device when either a liquid or a gaseous heat transfer fluid is used in the microchannel device.

The characteristic times for heat and mass transport drive the required cycle time for the requisite multi-stage separation device, however they are not equivalent to the cycle time.

Cycle times

Cycle times can be estimated for a gas and liquid separations. For the case of a liquid heat transfer fluid, the time required for mass transfer time may dominate the cycle time. For a gaseous phase separation the characteristic mass transfer time is 0.02 to 0.2 sec. This is equivalent to the time for a theoretical plate to equilibrate in a multi-stage equilibrium stage separation model. A cycle may have, for example, 5 to 10 or more theoretical stages. In addition, time for the mixture to move through dead zones of the device must be included within the cycle time calculation. Therefore, the cycle time for a 5 to 10 stage microchannel-based sorption device for a gas-phase separation may be as low as roughly 0.1 to 1 second. The actual value will depend upon a multitude of variables, including the efficiency of the design to reduce dead volume.

For a liquid-phase separation, the required time for mass transfer will always dominate the cycle time in a microchannel device. The characteristic mass transfer time is roughly 20 to 200 seconds in a microchannel device. It is anticipated that the minimum 5 to 10 stage cycle time will be about 100 to 1000 seconds.

Shorter cycle times to achieve the same degree of separation in a microchannel-based sorption device will lead to much smaller bed volumes and thus likely much lower hardware cost. Additional columns and purge streams for heating and cooling are not required in microchannel devices. Conventional TSA processes often mitigate the long characteristic times for conductive heat transfer through the bed volume by introducing a separate purge stream for the purpose of heating or cooling a bed through convective heat transfer prior to a sorption or desorption cycle. This addition of extra streams will thus introduce sorbent bed inefficiencies and added cost by not fully utilizing the sorbent bed at all times for either sorption or desorption.

DESCRIPTION OF THE PREFERRED EMBODIMENT(S)

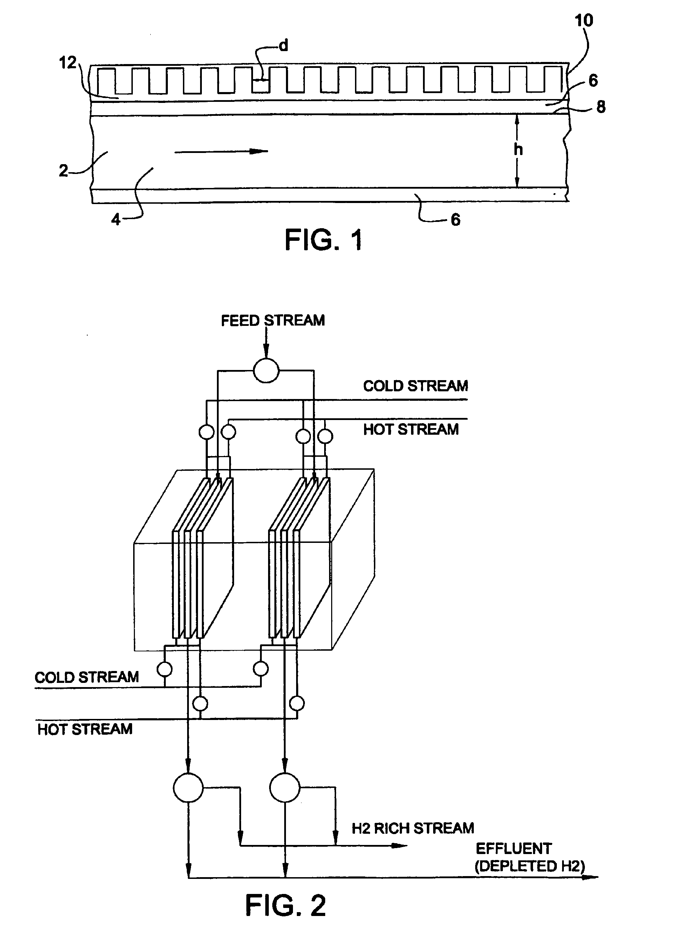

Fig. 1 illustrates one example of a flow channel **2** including open channel **4** and sorbent **6**. The direction of net gas flow through the channel is indicated by the arrow. Flowing gas contacts the sorbent **6** at internal surface **8.** For at least part of the flow channel, the distance from any point in the open channel (as measured in a plane perpendicular to flow) to the internal surface is 10 mm or less, preferably 0.1 mm or less. Utilizing a thermal swing sorption device in which flowing gas, for example, hydrogen, is in close proximity to the sorbent minimizes the distance and time for mass transport.

In preferred embodiments, the flow channel (or, in some preferred embodiments, the open channel) has: a height h of less than 1 cm, more preferably less than 2 mm, and in some embodiments 0.5 to 2 mm. The width and length may be of any value. However, these parameters have design considerations that lead to optimal designs. Longer lengths will create more active sites for sorption during any given cycle, but at the expense of a higher pressure drop and also, in at least some situations, longer residence time. Increasing the width of the sorbent zone will also create more active sites for sorption. However, increasing width might lead to flow maldistribution issues if the width is too large; although this effect can be mitigated using flow dispersing elements. The length and width can be optimized in view of the fluid properties and the accessible header size relative to the channel size. In some preferred embodiments, width (perpendicular to height and flow) is 0.01 cm to 300 cm, more preferably 2 cm to 25 cm; and length is 0.01 cm to 300 cm, more preferably 2 cm to 25 cm.

The flow channels can be disposed in a chamber that is on top or below or adjacent an array of heat exchanger microchannels. In an alternative arrangement (not shown), the flow channels can be disposed in an interleaved fashion between (i.e., alternating with coplanar) adjacent channels of heat exchanger channels. In some embodiments, at least 3 layers with flow channels alternate with at least 4 layers with heat exchangers **10.** The flow channel can be any shape but is preferably straight with an unobstructed open channel.

The internal surface **8** is preferably a Pd alloy or metallic Pd. It has been found that Pd can sorb and desorb hydrogen at surprisingly fast rates, leading to reduced cycle times. Pd is also a good thermal conductor. Unlike in catalysts, the surface palladium is not dispersed on an oxide surface, and is preferably a continuous layer. At low temperature, hydrogen is rapidly sorbed through surface **8** into sorbent **6.** In some preferred embodiments, the sorbent **6** is the same material as the surface **8.** In other embodiments, the sorbent **6** includes another material that reversibly sorbs hydrogen. For example, the hydrogen sorbent can contain any of the metal hydride forming elements (see, Greenwood et al., Chemistry of the Elements (1984)). Preferred sorbent materials include Pd, Pd alloy, Ti, V, $LaNi_5$, Al doped nickel lanthanides, and Ni. Because of the excellent selectivity of Pd or Pd alloys for hydrogen on the surface **8,** the underlying sorbent **6** need not be selective for hydrogen. For example, a hydride forming sorbent sublayer having a thickness of 10 nm to 1 mm may be coated with a thin Pd surface-exposed sublayer having a thickness of less than 0.025 mm, more preferably about 0.0001 to 0.02 mm. Preferably at least 80%, more preferably at least 90%, of the exposed surface (i.e., the surface exposed to the hydrogen-containing gas in the flow channel) of the sorbent is coated with Pd or a Pd alloy. For some applications, in which excellent selectivity is not required, the sorbent need not have a Pd surface. The thickness of the sorbent layer may be selected based on the volume of sorbent required to sorb a given quantity of hydrogen.

In preferred embodiments, the hydrogen sorbent is a thin layer. Conventional hydrogen sorbents crumble as a result of cycling, thus degrading thermal transport characteristics and degrading device stability. In the present invention, the sorbent layer can be kept thin so that the expansion and contraction of the sorbent/hydride layer does not result in crumbling. Instead, while cracks may form, due to its thinness, the sorbent layer maintains excellent adhesion to the underlying channel or heat exchanger wall. Since the height of flow channels can be made quite small, and the device cycled at high rates, multiple flow channels containing thin sorbent layers can be used in concert to separate significant quantities of hydrogen. In preferred embodiments, the sorbent 6 including surface 8 has a thickness of 0.0001 to 1 mm, more preferably, 0.004 to 0.1 mm. In some preferred embodiments, the sorbent is a dense (nonporous) thin layer, thus maximizing adhesion to the heat exchanger surface and sorbtion capacity as a function of volume.

For maximum use of space, in preferred embodiments, at least 80% of the internal surface of the flow channel is coated with Pd or a Pd alloy. After cycling, some amount of residual hydrogen may remain in the sorbent, but is not a yield loss. Other preferred sorbents include palladium alloys such as a palladium silver alloy. The palladium alloys can enhance durability of the device due to their greater resistance to crumbling over multiple cycles. Preferably, the sorbent material undergoes a phase transition, for example, to form a hydride, during sorption to enhance the sorption rates and/or capacity and/or selectivity.

The sorbent (for sorbing hydrogen or any other component) may contain a promoter or an intermetallic that improves dissociation kinetics thus decreasing sorption time, and reducing overall cycle time. For example, Ru particles on the surface of Pd may increase the rate of sorption and desorption. In general, the addition of a secondary (or tertiary) material (often times in very small quantities) to a primary material can influence the net rate of hydrogen (or other gaseous species) adsorption onto the surface of the primary material in a heterogeneous system. By affecting the kinetics of the adsorption process and the surface composition, the added material can also increase the ultimate adsorptive capacity (or apparent capacity) of the primary material surface. The first effect, increasing the rate of sorption (purely a kinetic phenomena), is a two-fold result of the chemical nature of the added material (which, in the case of hydrogen, results in faster dissociative hydrogen adsorption) and how this chemical nature interacts with the primary material to result in physically-segregated surface structure, which, in turn, can affect the ultimate adsorptive capacity (or apparent capacity).

Ru at defect-like sites adsorb (and subsequently dissociate) hydrogen at a faster rate than Ru atoms lying away from edges or corners, in "basal planes". Thus, the observed (or "apparent") kinetics of hydrogen adsorption on Ru (and many other materials) really represents the superposition of the different kinetics of different Ru sites. This phenomenon can be applied to have the opposite effect: adding an element like Ru to a system that does not adsorb hydrogen as easily/quickly results in faster apparent adsorption kinetics.

The explanation of second effect (the apparent alteration of the ultimate adsorptive capacity of a material) is a bit more complicated, but it is basically an extension of the same concept. Since altering kinetics cannot change the equilibrium of a system, it seems like this concept violates thermodynamics. In reality, though, the observed effect is really due to deconvolution of superimposed effects: different phases of a material have different adsorption stoichiometries (i.e. one packing arrangement (call this arrangement 111) of surface metal atoms (M) may adsorb a gas (A) in a ratio of M(111):A = 1:1, while another arrangement (call it 110) (which is present in the same material in a certain proportion) adsorbs more, M(110):A = 1:2. Adding a second material (N), which selectively occupies (111) sites and also adsorbs more A, N(111):A = 1:2, results in more net adsorption of the gas, A. If N also adsorbs A faster than M, then the first effect and the second effect compliment each other.

In general, the sorbent is selected for sorption of the desired component. The sorbent can be disposed as dense or porous sorbent layers on the flow channel walls. The sorbent can be directly coated on the flow channel walls. The sorbent could be a porous sorbent, preferably a monolith, inserted into a flow channel. The sorbent could also be disposed on a porous substrate, preferably a thermally-conductive felt or thermally-conductive continuously porous foam. A porous sorbent, preferably in the form of a monolith, could be inserted into a flow channel. A relatively thin interfacial layer such as a ceramic could be interposed between the porous substrate and sorbent to improve adhesion and/or increase sorbent surface area. Alternatively, the porous substrate could be entirely formed from the sorbent material. In some embodiments, a porous sorbent fills or substantially fills the open channel such that substantially all the gas flows through the porous sorbent (typically a sorbent-coated porous substrate).

A heat exchanger 10 is in thermal contact with the flow channel. Preferably, the heat exchanger is a microchannel heat exchanger meaning that the channel or channel have a height (the dimension described above) and/or a width d of less that about 2 mm. Flow of the heat exchange fluid in the heat exchanger can be cross-(illustrated), counter- or co- flow in relation to gas flow through the flow channel. Preferably, the heat exchanger is directly adjacent to the flow channel and more preferably the heat exchanger substantially overlaps the flow channel. In a particularly preferred embodiment, the heat exchanger and flow channel are adjacent and substantially coextensive thin layers with width and length substantially larger than height. Preferably the same wall 12 comprises the wall of both the heat exchanger and flow channel and in this embodiment, the wall is included in calculating height of the heat exchanger but not the flow channel. The heat exchanger contacts the flow channel through a thermally conductive material, such as steel, aluminum or plastic. The heat exchanger can utilize any suitable heat exchange fluid, with water and heat transfer liquids (such as Therminol™) being especially preferred, gases and vapors less so. In a particularly preferred embodiment, conditions for sorption and/or desorption are selected to coincide with a phase change of a heat transport fluid - for example, very high rates of heat transfer can be obtained by condensing and/or vaporizing stream.

In general, it is highly desirable to form a system with minimal thermal mass. Preferably, thermal swing sorption is conducted at low pressure (preferably about 7 to 7000 kPa (1 to 1000 psig) more preferably 7-2100 kPa (1-300 psig) so that relatively thin walls can be used to contain the system. Low pressure operation can be further aided by operating sorption and desorption in stages with a relatively narrow temperature range that is optimized for a particular pressure range. In preferred embodiments, less structural support is provided in regions that will operate at relatively lower pressure.

Fig. 2 schematically illustrates an embodiment of the invention in which a feed stream is distributed among multiple flow channels each of which is sandwiched between heat exchangers. Valves (indicated by darkened circles) control gas flow as well as heat exchange fluids.

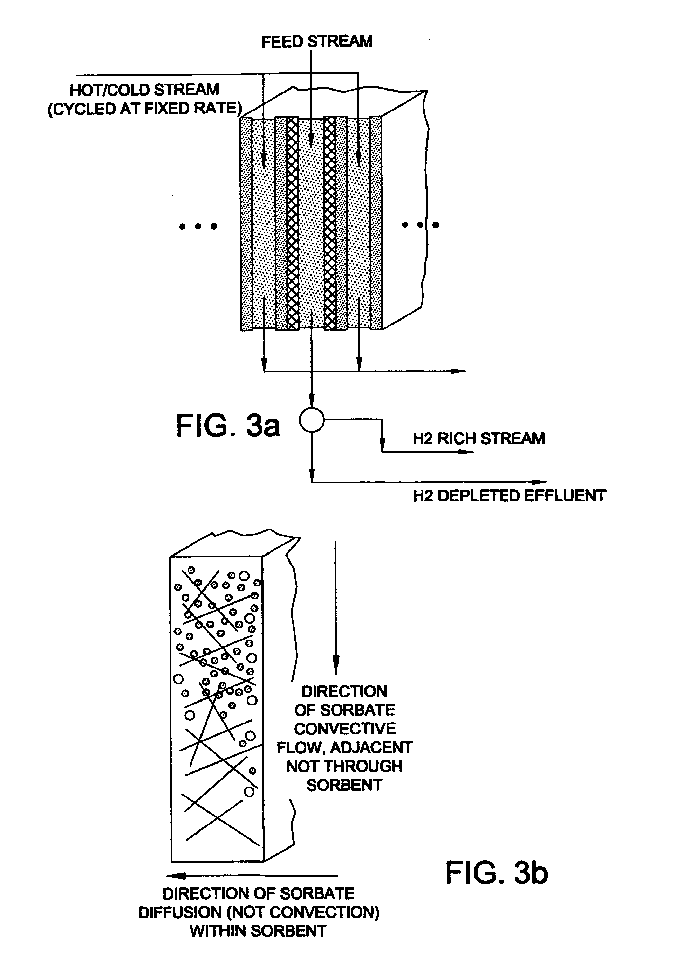

Fig. 3a illustrates the case where a sorbent (cross-hatched) is disposed on the sides of an open channel. A component in the feed stream can diffuse from the open channel into the walls where it can be sorbed and thus separated from the feed stream. As indicated by the dots in Fig. 3a, the capacity of the device could be readily increased by stacking repeating layers of flow channels and heat exchangers. Fig. 3b illustrates a separation process through apparatus such as that represented in Fig. 3a. A gas mixture containing weakly sorbed molecules (o) and strongly sorbed molecules (●) enters the flow channel. The shaded molecules indicate preferentially sorbed molecules with the lighter shaded circles representing molecules actually sorbed into or onto the sorbent. The pores are sufficiently large to enable fast molecular diffusion within the tortuous 3-D structure. Solutes then may diffuse either molecularly or through Knudsen diffusion within smaller pores found within the active sorbent coated on the engineered sorbent substrate. The size of the smaller pores is less than the size of the large pores. Preferably, the pores are in the micro to mesoporous range to enable a high surface area with many sites for rapid sorption. Sorption occurs at low temperature, and temperature is switched to high temperature before the preferentially sorbed molecules elute from the channel. The purified stream (o) is one of at least two product streams from this process. The process could be designed and operated for a multi-component separation, where a ternary or higher mixture is separated into components rather than just a binary separation. However, separating or purifying multiple streams will require additional stages. Preferably, the microchannel dimension is about 2 mm or less. The height and length may be of any value. The thickness for an engineered, for example, porous, sorbent is preferably between 100 microns and 500 microns. More preferably, the thickness of the engineered sorbent is between 100 and 250 microns. Convective flow is essentially through a gap that is adjacent to the engineered sorbent. The solutes primarily diffuse through the gap to the engineered sorbent and then continue to diffuse through the engineered sorbent. The direction of diffusion through the engineered sorbent is primarily normal to the direction of convective flow.

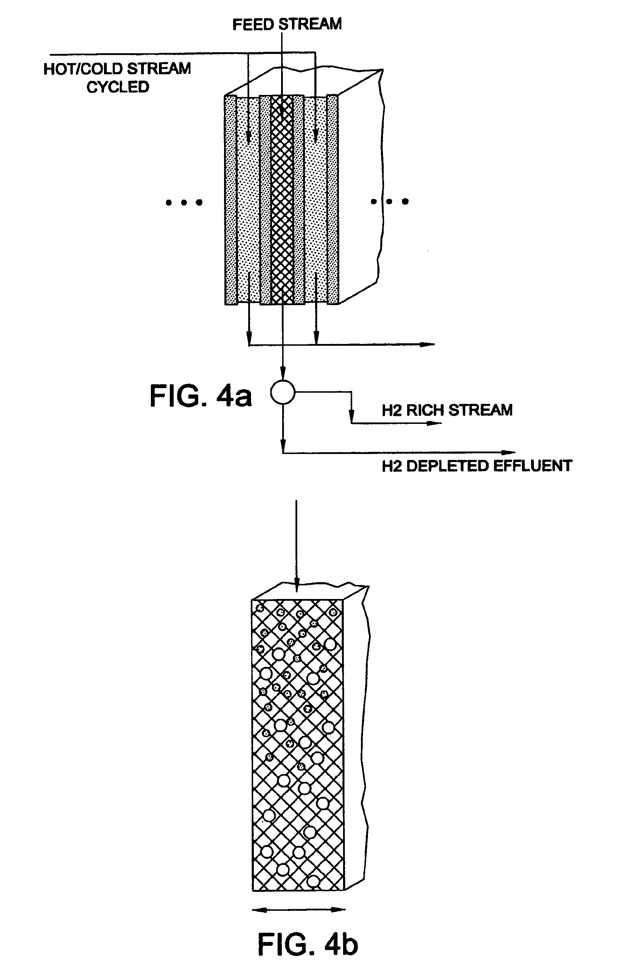

Fig. 4a illustrates a configuration in which a porous sorbent (cross-hatched) fills the flow channel. Since the sorbent is porous, flow occurs through the sorbent; however, the pressure drop through the flow channel is generally higher than in the case of an open channel.

Figure 4b illustrates an alternate embodiment for a porous sorbent within a microchannel-based sorption device. In this embodiment, flow is primarily directly through the sorbent. Diffusion distances for mass transfer within this embodiment may be shorter than in the flow-by configuration shown in Figures 1 - 3. The mass transfer distance is essentially limited by the size of the large pores where convective flow occurs and the coating thickness of the active sorbent agent placed upon the surface of the engineered sorbent substrate. The size of these pores typically range from 10 to 500 microns. However, the reduction in mass transfer resistance will be offset by an increase in pressure drop. As flow is force through the tortuous network of open pores, the increase frictional losses will increase pressure drop. For applications that are not sensitive to maintaining a low-pressure drop, this approach may be preferred.

The "porous materials" (including "porous sorbent") described herein refer to porous materials having a pore volume of 5 to 98%, more preferably 30 to 95% of the total porous material's volume. At least 20% (more preferably at least 50%) of the material's pore volume is composed of pores in the size (diameter) range of 0.1 to 300 microns, more preferably 0.3 to 200 microns, and still more preferably 1 to 100 microns. Pore volume and pore size distribution are measured by Mercury porisimetry (assuming cylindrical geometry of the pores) and nitrogen adsorption. As is known, mercury porisimetry and nitrogen adsorption are complementary techniques with mercury porisimetry being more accurate for measuring large pore sizes (larger than 30 nm) and nitrogen adsorption more accurate for small pores (less than 50 nm). Pore sizes in the range of about 0.1 to 300 microns enable molecules to diffuse molecularly through the materials under most gas phase sorption conditions. Preferred porous materials include foams and felts, where felts are collections of fibers or strands. More preferably a porous material is a unitary piece of material (also called a monolith) that is sized to fit within a flow channel and occupying a selected portion of the cross-sectional area of the flow channel.

Fig. 5a illustrates apparatus 860 where a flow distribution layer 862 (typically a sheet having random, regular, or spaced pores, slots, holes, or the like) can distribute feed 864 along a length of the chamber 866. The chamber 866

preferably contains a sorbent material **868** (although illustrated as a single layer along the length of the chamber - thus enabling low pressure drop, it should be recognized that a sorbent material **868** could have any of the configurations described herein).

Fig. 5b illustrates an embodiment in which a bulk flow path **820** is disposed between porous sorbent material **822,** although some flow may convectively travel through the large pores in the porous material. Flow through the large pores increases when the pore diameter of the porous insert increases and approaches an order of magnitude below the hydraulic diameter of the open area. This chamber could be configured as a tube, with a ring or partial ring of sorbent, but is more preferably a planar arrangement. The planar arrangement enables economical stacking of chambers with other components such as: additional chambers, heat exchangers, etc. The contiguous, straight-through configuration of the bulk flow channel creates the opportunity to perform gas phase separations with low pressure drops.

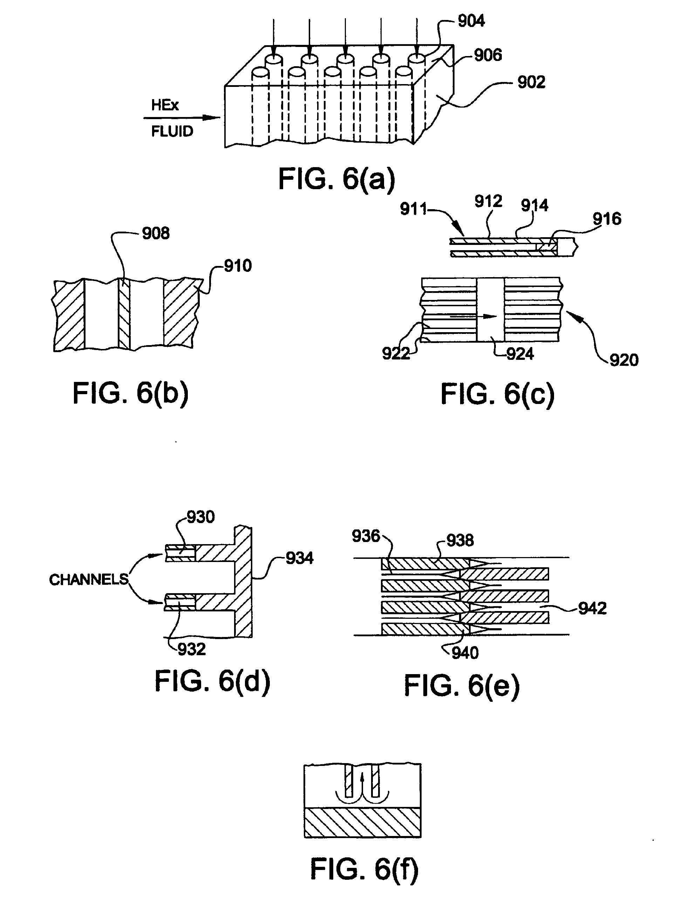

Figs. 5c and 5d illustrate sorption chamber configurations in which corrugated inserts **826** provide high surface area for sorption while contiguous flow paths **828, 832** enable sorption to be performed with low pressure drops. The inserts **826** either have a surface coating of a porous sorbent material or, preferably, are comprised of a porous sorbent material. A similar configuration is illustrated in Fig. 6d.

Fig. 5e illustrates an embodiment in which a corrugated porous sorbent material **826** is disposed in the sorption chamber such that gas flow is partially through, and around the sorbent. This configuration ensures contact with the porous sorbent; however, this configuration has the disadvantage of significantly higher pressure drops than with an open channel, but the advantage of more intimate contact of the gas with the sorbent surface.

Figs. 5f and 5g utilize sorbent fibers **836, 838.** These fibers may, for example, be porous ceramic, metal or composite fibers. The parallel fibers **836** are preferred because they cause less of a pressure drop. The fibers **838** create tortuous flow through the chamber. In either case, sorbent fibers are preferred over powders because they cause less pressure drop, can have better thermal conductivity, and can provide a more uniform and controlled surface. The chamber walls **840, 842** can be ceramic, plastic, metal (for good thermal conductivity), or composites.

Figs. 5h and 5i illustrate chambers with baffles **846, 848.** Baffles **846** comprise plates or rods composed of a porous sorbent material or that are coated with a sorbent material. Baffles **848** comprise plates or rods composed of a porous sorbent material. Flow can either be parallel **849** or nonparallel **847** or differing solutes can flow in differing directions (e.g. orthogonal solute flows). In either case, there is a contiguous bulk flow through the chamber. These baffles can create turbulence and enhance contact of gaseous solutes with the sorbent. The baffles, which preferably comprise a thermally conductive metal, provide good heat transport to (or from) the walls. The chamber walls **854** may be of the same materials described above for walls **842.**

Fig. 5j illustrates a porous sorbent matrix material **850** within which there are contiguous bulk flow channels **852.** The matrix **850** can be the chamber walls or the entire article **855** can be an insert that fits into an opening. Preferably the matrix material contains 1 to 10,000 more preferably 10 to 1000 bulk flow channels 852. In a preferred embodiment, the bulk flow channels **852** are essentially straight. In another embodiment, these channels are tortuous. In yet another embodiment, the channels **852** are filled with a sorbent material and bulk flow of solutes and solution is primarily through the matrix.

Fig. 6a illustrates a sorption apparatus **902** with tubes/chambers **904,** each of which may contain a porous sorbent material (not shown) in any of the configurations described herein. The gas mixture flows through the tubes. On the outside of these tubes is a bulk flow volume **906.** In a preferred embodiment, a heat exchange fluid flows through the bulk flow volume; flow of the heat exchange fluid can be crossflow, concurrent flow or counterflow to the flow of gaseous solutes and products.

Fig. 6b illustrates a configuration in which a porous sorbent material **908** is disposed within the chamber without direct contact to the chamber walls **910.** This embodiment may require longer cycle times to overcome the higher heat transfer resistance. In another embodiment (not shown), the material **908** comprises a core of a large pore structure (in which molecular diffusion occurs) and a small pore structure (through which Knudsen diffusion occurs) on the outer sides. Sorbent may be coated on the small pore structure, or on the large pore structure, or on both.

The top of Fig. 6c illustrates a chamber **911** having a bulk flow path **912** and porous sorbent material **914, 916.** The porous plug **916** serves to provide sorbent contact to any gaseous species that remain unsorbed after passage through bulk flow path **912.** The flow regime in this example, and in other figures, is typically laminar based upon the classical definition of the Reynolds number less than 2000. Although the flow regime may also be transitional or turbulent in the microchannels, this is less common. For laminar flow, there will be gas species that move along the centerline of the channel. Not all molecules may have an opportunity to diffuse to the porous sorbent. For those molecules that do not diffuse to the wall to sorb, this is referred to as 'slip'. The overall sorption may thus be a few percentage points lower than equilibrium would suggest attainable. The use of the porous sorbent material through the entire cross section for a fraction of the channel length serves to reduce slip and enable overall higher sorption capacity.

The bottom of Fig. 6c illustrates a sorption apparatus comprised of multi sorption chambers **922** and a mixing chamber **924.** The mixing chamber combines gases from at least two chambers **922.** The mixing chamber helps to equalize concentration between multiple chambers by mixing the possibly laminar flow streamlines and helps to ensure a higher overall sorption than if the at least two chambers were joined into one chamber by reducing the centerline slip of fluids.

Fig. 6d illustrates a separator in which the bulk flow from at least two sorption chambers **930, 932** flow into porous material **934**. In an alternative mode of operation, flow enters through flow path **930,** through porous material **934** and out through flow path **932**. This embodiment also serves to reduce the possible slip of fluids and bring the overall sorption closer to that predicted at equilibrium.

Fig. 6e illustrates a forked configuration in which a gas mixture enters a first compartment **936,** having a dimension of about 2 mm or less, and convectively travels past porous sorption material **938** and then travels convectively through porous material **940**. While traveling in compartment **936,** the feed may diffuse to the porous sorbent. The gas exiting the porous material **940** flows into second compartments **942**. The compartments **936** and **942** may or may not be offset. By offsetting porous dividers **938,** the gas flows in adjacent first compartments are further mixed to reduce the slip of components.

Fig. 6f illustrates a flow configuration where the feed flows along one side of a porous sorbent in the first flow path, makes at least one bend, and then travels back along the other side of the porous sorbent in the opposite flow direction to form at least one second flow path. In an alternate configuration, a second sorbent may be used for the second flow path. In another configuration, a wall may separate the porous sorbents used in the first and second flowpath.

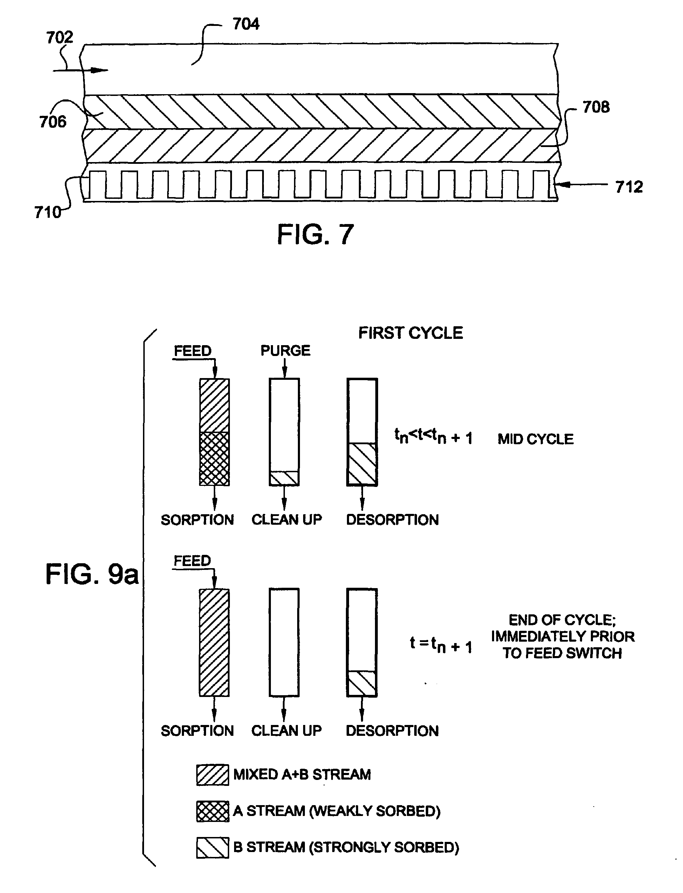

Another preferred embodiment is illustrated in Fig. 7. In this embodiment, a fluid mixture feed stream **702,** for example, a hydrogen-containing feed stream, passes into open channel **704**. During the cool phase of a cycle, a component, for example, hydrogen, is selectively sorbed in sorbent **706**. To desorb, the feed stream is discontinued and heat is added from electrically resistive heating element **708**. Electrical heating in restricted volume devices can rapidly increase temperature (100°C per second or more, see, e.g. U.S. Patents Nos. 6,174,049 and 4,849,774) thus enabling very short desorption phases. Heat from the electrical resistor **708** is then removed through microchannel cooler 710. In this configuration, the heat exchanger is formed by a combination of electrical resistance heating with a coolant fluid 712 (shown in optional counter-current flow). In an alternative embodiment, the sorbent is in the form of a thin film on an electrically insulating material that is in thermal contact with a heat sink (the structure could include, for example, a relatively massive block of a heat conductive material). For desorption, the heating is so fast that a negligible portion of the heat is conducted through the insulating material and into the heat sink. Upon termination of the electrical current, the sorbent rapidly cools to the temperature of the heat sink, and a sorption cycle can begin.

In the case of hydrogen separation, the sorption heat of hydrogen on Pd is about 37,000 J/mole, or 1247 J for 800 cc. One cc of Pd, 11.98 grams, can adsorb 800 cc (289 K) of hydrogen. The heat capacity of the Pd is 0.243 J/gm K. Assuming a temperature change of 20 K, the heat adsorbed by the Pd will be 58 J/cc. The total heat required becomes 1306 J to desorb 800 cc of hydrogen. The electrical resistivity of Pd is 13.8-Ohm cm (371 K). If the Pd film is 3 $\mu$m thick and 1 cm wide, for 1 cc of Pd the strip would be 3333 cm long. If n cm long, the cross section will be $0.0003*n$ cm$^2$ and the length $3333/n$ cm. The resistance of the film is then $1.53*10^8/n^2$. The energy required to heat the Pd and desorb the hydrogen is 1306 Watt seconds per 800 cc, or 1632 Watt seconds per liter. If n is 1000, the current needed to do the heating in 0.3 seconds is 5.3 amp and the potential 816 volts. If n is 2000, the current needed to do the heating in .01 seconds is 58.4 amps and the potential 224 volts.

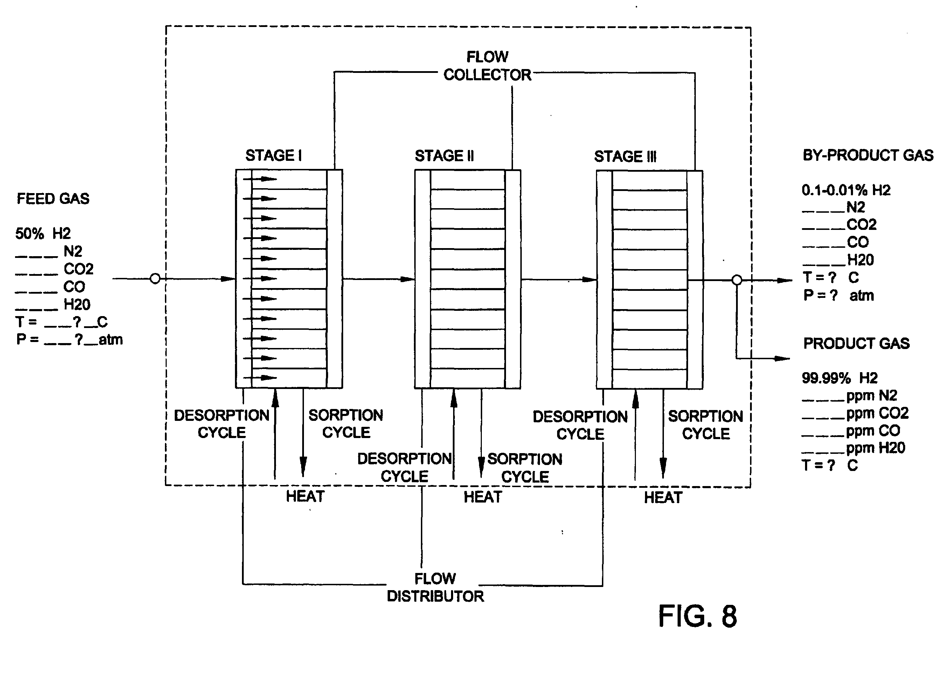

In a preferred embodiment, fast and efficient heat exchange is achieved by sandwiching a flow channel layer between heat exchanger layers. More preferably, the separation apparatus is made up of multiple alternating layers of heat exchangers and flow channels. The heat exchangers and flow channels can be manifolded into larger systems. One such system is illustrated schematically in Fig. 8. In operation of the schematically illustrated device, a fluid mixture passes into a first header and is distributed into multiple flow channels with intervening heat exchangers (not shown). A component is selectively sorbed into or through the sorbent, for example, the Pd surfaces, in the flow channels. The component-depleted fluid is collected in a header and passed into a second unit (stage II) where more component is sorbed, and still more residual component can be removed in the flow channels in stage III. Finally, the product fluid that is depleted in at least one component is released or collected through outlet 82. In some embodiments, an inlet valve is closed, and temperature is increased. At the higher temperature, the component is desorbed and collected. If desired, a sweep fluid, for example a sweep gas, could be used.

The sorbent capacity could be further increased by heating down the length of a flow channel to drive off sorbed fluid, for example, gas, while introducing feed to the beginning of a flow channel. In this technique heating is timed such that the desorbed species exits before the non-sorbed feed stream reaches the flow channel exit.

For combustible components, such as hydrogen, the system could be made more efficient by combusting a nonsorbed component that exits with the feed stream in another area (or stage) of the apparatus where desorption is occurring. Suitable conduits and valving can be used to direct the nonsorbed component stream to a combustor layer that is in thermal contact with a sorbent layer.

Numerous additional steps could be added to the inventive methods. For example, the feed fluid could be pretreated to remove constituents from the feed mixture that could poison the sorbent surface. One option is using a molecular sieve sorbent such as a zeolite in a pretreatment zone or bed. Desorption can be made faster by using a heated sweep fluid, for example, a heated sweep gas. Fluid obtained at any stage could be recycled back to an earlier stage.

The flow channel(s) and heat exchanger(s) can be a stand-alone unit or can be connected to the outlet of a reactor such as a steam reformer, water-gas shift reactor, etc. and the hydrogen separated can then be passed into another device such as a fuel cell - thus forming a power system. Systems incorporating the hydrogen sorption apparatus described herein can include: from large (up to 100+ multi million standard cubic foot per day MMSCFD) hydrogen plants to modular hydrogen generating units (~1 MMSCFD), fuel processors for distributed electricity generators, fuel processors for automotive fuel cells, and very small fuel processors for fuel cells that displace batteries in portable devices

The fluid separation apparatus may be formed, for example, by bonding thin metal or composite plates, for example, Pd composite plates, to the heat exchanger surface, or by using a sorbent, for example, Pd, as the material for the walls of the heat exchanger. These plates can be quite thin - for example, one $\mu$m or less. A channeled plate for a heat exchanger could be made by techniques such as electrodischarge machining (EDM), milling, etching, vapor depositing metal or alloys, and electrolessly plating Pd metal, phosphide, and alloys. Flow channels could be manufactured by bonding three plates in which the center plate has a channel or channels cut through it, and the top and bottom plates have a sorbent-coated internal surface, for example, a vapor-coated Pd internal surface. Flow channels may alternatively be electrolessly plated - a technique that provides uniform deposition throughout the structure. A porous insert could be inserted into the flow channels. The plates, including the heat exchanger plates can be stacked and diffusion bonded, or sealed with the Pd-containing plate while depositing the Pd material as sorbent.

The sorption devices can be constructed from non-metallic materials, such as plastics. For temperatures below about 400 °C, there are a variety of plastics that can withstand the operating temperatures for most sorption systems. Most sorption systems operate at relatively low temperatures because the capacity of a sorbent for most solutes is inversely proportional to temperature with highest capacity achieved at low temperatures. A preferred plastic material is polyimide that can be heated electrically; thus, electric heaters could be used in place of or in addition to the heat exchange fluids. Also, the sorbent or the substrate material containing the sorbent could be electrically heated, and thus avoid heating the bulk materials that are used to construct the apparatus.

The use of thin sorbent layers is a benefit to the manufacture of in the inventive devices because surface finishing processes which produce highly reliable thin coatings can be used rather than only expensive milling techniques. Such surface finishing methods are electroless plating, electrolytic plating, sputter coating, chemical vapor deposition, electropolishing, electroforming, etc. These techniques also readily allow deposition of pure metals, alloys, and/or multi-layers of these. They can be operated in batch or highly economical continuous mode even in roll-to-roll processes, which can generate many thousands of square feet/day. These coated flat sheets are then cut and layered with flow dispersant and heat transfer fluid carrying layers to finish fabrication of the device. Final sealing can be done using adhesives, welding, diffusion bonding, brazing, etc., whichever is the most practical for the materials and dimensions involved.

The input fluid mixture may contain numerous gases such as: $H_2$, CO, $CO_2$, $H_2O$, $C_1$-$C_{10}$ alkanes especially $CH_4$, $C_2H_6$, $C_3H_8$, $C_4H_{10}$, naptha and other light petroleum-based feed components, $N_2$, $O_2$, Ar, ammonia, and lower alcohols, especially methanol, ethanol and propanol, and sulfurous gases and vapors such as $SO_2$, $SO_3$, $H_2S$, $CS_2$ and COS. The fluid mixture may also contain a mixture of liquids, including alkanes, alkenes, alcohols, ethers, acids, water, and other organic or inorganic components in solution.

The fluid mixture feed will have a T and P characteristic of the source, and also a desirable T and P for the purified product. It is an advantage of the invention that preconditioning the gas to a specific T and /or P is not necessary since the sorbent composition can be selected to accommodate various feed and target P-T profiles. For a particular sorbent and P-T range, the fluid mixture, for example, a hydrogen-containing gas, may flow into the flow channel at a preferred partial pressure (absolute) range of $1 \times 10^{-4}$ mbar to 20 bar; more preferably $1 \times 10^{-3}$ to 3 bar. The pressure should be kept low enough so that the apparatus doesn't burst. In some embodiments, the flow channel contains internal baffling to minimize laminar flow, or is sufficiently narrow so that the gas collides with the sorbent frequently enough to allow sorption of the selected component, or at least a substantial portion of the selected component, for example hydrogen content. Flow rates through the apparatus will depend upon the device size and other factors such as the desired efficiency and back pressure. In preferred modes of operation, no pumping (either for evacuation or compression) is utilized, although changes in pressure will typically occur as a result of thermal cycling.

The separation process is preferably run in multiple stages where at least one latter stage is run at a lower sorption temperature than an earlier stage. More preferably, the process includes at least 3 successive sorption stages, each of which is conducted at a successively lower temperature range. As the partial pressure of the selected component decreases, a lower temperature is used to more effectively sorb the component. This technique provides greater overall component separation while operating at narrower average temperature swings than if the temperature range was the same in all stages.

In an apparatus, a stage is a device or portion of a device, such as a parallel array of microchannels, that acts to either sorb or desorb a component from a fluid solution. A single device can have multi-staging. In a process, a stage is a sorption or desorption operation in which separation occurs, preferably one in which equilibrium is substantially reached (at least about 85%). Description of 3-stage sorption device

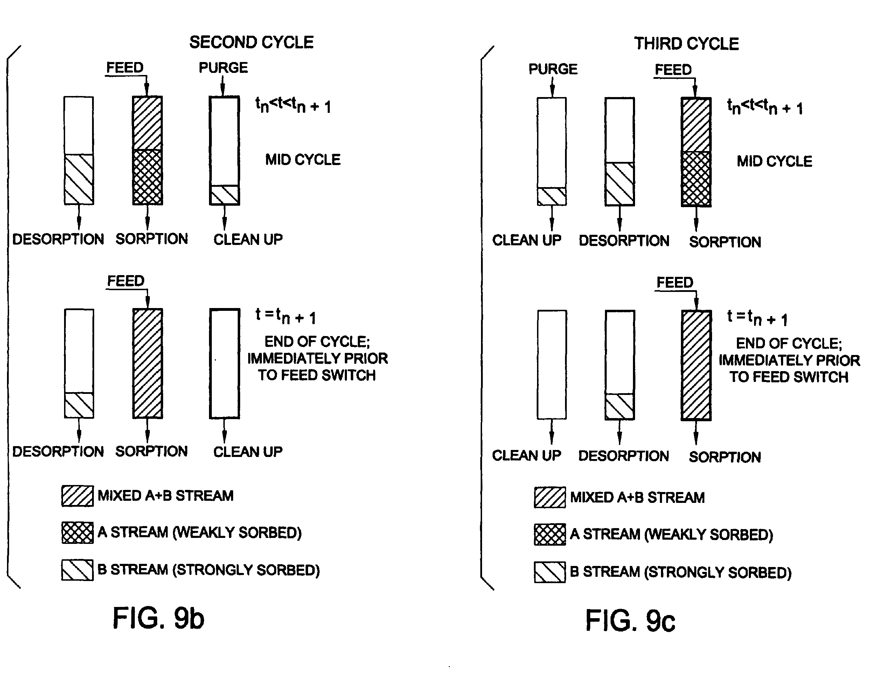

The premise of a 3-stage sorption device is similar to a 2-stage sorption device in that the temperature is lowest during the sorption cycle and highest during the desorption cycle. The feed is cycled from left to right (shown in Figures 9a-9c), or alternatively from right to left (not shown), in a continuous or semi-continuous fashion.

The primary difference between a 2-stage and a 3-stage sorption device is the addition of an additional stage between the desorption and sorption stage. Typically, there will also be an increase in recovered yield, product purity, and/or energy utilization. The additional channel may serve one or multiple purposes, including providing additional time for desorption if the sorbent has a high degree of surface heterogeneity including sites that strongly hold a solute or change temperature more slowly. The addition of a third stage may also be used to pre-cool the sorption channel prior to a feed switch. This will in effect increase the capacity of a particular stage because the temperature is equal to $T_c$ during all time of the sorption cycle.

The upper and lower temperature can be controlled by heated or cooled heat transfer fluid, water, or gas, including combustion gas or steam. Heating, which can be controlled by electrical (joule heat) as well, preferably ranges from -50 to 1000 °C ; more preferably 8 to 160 °C. In most instances, temperature of the flow channel is controlled by the temperature of the heat exchange fluid flowing through the heat exchanger. Temperature can be continually changing; however, temperature is preferably jumped from high to low, or from low to high points with minimal transition time, generally faster than once per 10 sec, preferably 1-10 times per second, and most preferably 100 -1000 times per second. The construction of the inventive device, with its good thermal conductivity, low heat capacity, and short thermal transport distances, enables rapid temperature changes in the flow channel. This ability for rapid temperature change is further enhanced where the sorbent, for example, Pd or Pd-alloy, hydrogen-sorbing surface, is disposed on the walls of the flow channel. Temperature change of the Pd surface (for example, as measured by a thermocouple) is carried out at a rate of at least 20 °C/sec, with a preferred range of 200 to 2000 °C/sec.

The inventive process is preferably carried out over a sorption/desorption cycle time of 0.1 to 1000 Hz; more preferably 100 to 1000 Hz. More particularly, the sorption (low T) portion of each cycle preferably occurs for 0.1 to 10 s, more preferably 0.001 to 2 s; while the desorption portion of each cycle preferably occurs for 0.1 to 1 s, more referably 0.001 to 0.01 s.

Purity of a recovered component (using hydrogen as an example) may be improved in several ways. The total void volume is preferably minimized in the design of the TSS sorption/desorption device. Hence, fluid passageways are preferably short and small. This feature also helps decrease the time for sorption since gas diffusion and transport distances are short. For the Pd example, over 800 volume of $H_2$ gas at STP is sorbable per volume of Pd. Hence, if the sorbent volume is 10 $\mu$ thick and the gas compartment is 100 $\mu$ thick, then approximately 1/10th of the original feed gas with contaminants still resides within the gas compartment. Note that it is necessary to flow hundreds of volumes of feed gas to the sorbent in order to fully load it due to the high $H_2$ absorption coefficient for Pd. Hence, in this preferred case, even with the residual gas contaminants still present in the channel after loading, about 90% of the contaminants are removed even if this residual feed gas is allowed to remain in the feed gas compartment during the desorption cycle.

A second means of handling the contaminants in the residual feed gas are to flush the gas space with a small amount of the purified $H_2$ recycled back from the purified product stream, perhaps 0.1-10% of the product gas being recycled. The more back flush the purer the hydrogen gas product. In multi-staging TSS devices, the intermediate partially purified streams also could be used for the above flush gas to improve product gas purity and energy conservation.

A third means to minimize the cross contamination between feed gas and purified product gas is to at least partially evacuate the gas compartment for a very short (<2 s, preferably less than 0.1 s) period prior to desorbing. The vacuum exposure time is kept very short to minimize losses of $H_2$ due to premature $H_2$ desorption due to the low partial pressure of $H_2$ during evacuation. Also, complete evacuation is not required, the levels of evacuation being proportional to reach a desired residual impurity level.

The methods and apparatus of the invention can be characterized by their properties. For example, in the case of hydrogen separation, the methods and apparatus of the invention can be characterized by one or more of the following properties. Preferably, in a single sorption step, hydrogen is sorbed at a rate of 0.001 to about 0.05 mol $H_2$ per cubic centimeter (cc) of sorbent, more preferably at least 0.01, and still more preferably at least 0.03 mol $H_2$ per cubic centimeter (cc) of sorbent. This sorption step preferably occurs in less than 10 seconds, and more preferably less than 1 second, and still more preferably less than 0.1 second. Preferably, in a single desorption step, hydrogen is desorbed at a rate of 0.001 to about 0.05 mol $H_2$ per cubic centimeter (cc) of sorbent, more preferably at least 0.01, and still more preferably at least 0.03 mol $H_2$ per cubic centimeter (cc) of sorbent. This desorption step preferably occurs in less than 10 seconds, more preferably less than 1 second, and still more preferably less than 0.1 second.

The most important characteristics of the invention, viewed in its totality, are the separating ability and productivity. Preferably, gas obtained from the inventive process and apparatus is at least twice as pure, more preferably at least 10 times (one tenth the initial mass of contaminants, e.g., 90% pure to 99% pure), still more preferably at least 100 times, more pure than the initial hydrogen-containing mixture. Also, preferably, the invention produces hydrogen at a rate of 2.8 m$^3$ (100 standard cubic feet (scf)) to about 85 m$^3$ (3000 scf) H$_2$ per cubic centimeter (cc) of sorbent per day, more preferably at least 28.3 m$^3$ (1000 scf), and still more preferably at least 56.6 m$^3$ (2000 scf) H$_2$ per cubic centimeter (cc) of sorbent per day. This rate can occur in batch, semi-continuous or continuous form, and for any fraction of a day, and, more preferably for multiple days.

Examples

Test apparatus was constructed using 1.27 cm (0.5 inch) stainless or low carbon steel tubing that had its external surface covered with a Pd coating of either Pd metal, Pd-P alloy or Pd-Ni alloy. Eight inches of the Pd-covered tube was jacketed in a 5.08 cm (2-inch) diameter tube having a gas inlet and pressure gauge. Cold water (8-15 °C) and 109-153 °C steam were passed through the tube for the cold and hot portions of a cycle, respectively.

Palladium, i.e., palladium-phosphorus alloy, was electrolessly plated as follows. A palladium solution was prepared by mixing 2.0 g PdCl$_2$, 3.8 g potassium sodium tartrate tetrahydrate, 5.12 g ethylenediamine and 0.82 g sodium hypophosphite in 200 ml water and pH adjusted to 8.5 by addition of HCl. A stainless steel bar was treated with sulfuric acid, rinsed with water and wiped with toluene to remove any grease. The stainless steel bar was then reacted for 3 minutes with a sensitizer solution prepared by dissolving 2.4 g tin, sulfate and 10 ml conc. HCl in 250 ml water. The sensitized steel bar was then transferred for 1 minute to a seed solution that had been prepared by dissolving 0.01.25 g PdCl$_2$ and 10 ml conc. HCl in 250 ml water. The steel bar was removed, rinsed with water and immediately plated by immersing in the palladium solution. After depositing the desired thickness, the bar was removed, rinsed with isopropyl alcohol and dried. Deionized water was used in all preparations.

Palladium was electrolytically plated as follows. An electrolytic palladium solution was prepared by mixing 2.5 g diaminepalladium (II) nitrite with 27.5 g ammonium sulfamate in 250 ml water and pH adjusted to 7.5-8.5 by addition of ammonia. A stainless steel bar was cleaned by immersion in a solution of sodium hydroxide, sodium carbonate and sodium lauryl sulfate. The steel bar was removed from this solution and wiped with toluene to remove grease. Electrical wires were attached to the bar and, while the bar was in the sodium hydroxide cleaning solution, current applied for 2 minutes at a current density of 538 A/m$^2$ (50 A/ft$^2$). The bar was removed and immediately placed in the electrolytic palladium solution and 54 A/m$^2$ (5 A/ft$^2$) of current applied with the steel bar as the cathode. A low carbon steel was electroplated by an analogous process.

A tube coated with Pd-nickel cermet was prepared according to manufacturer's directions.

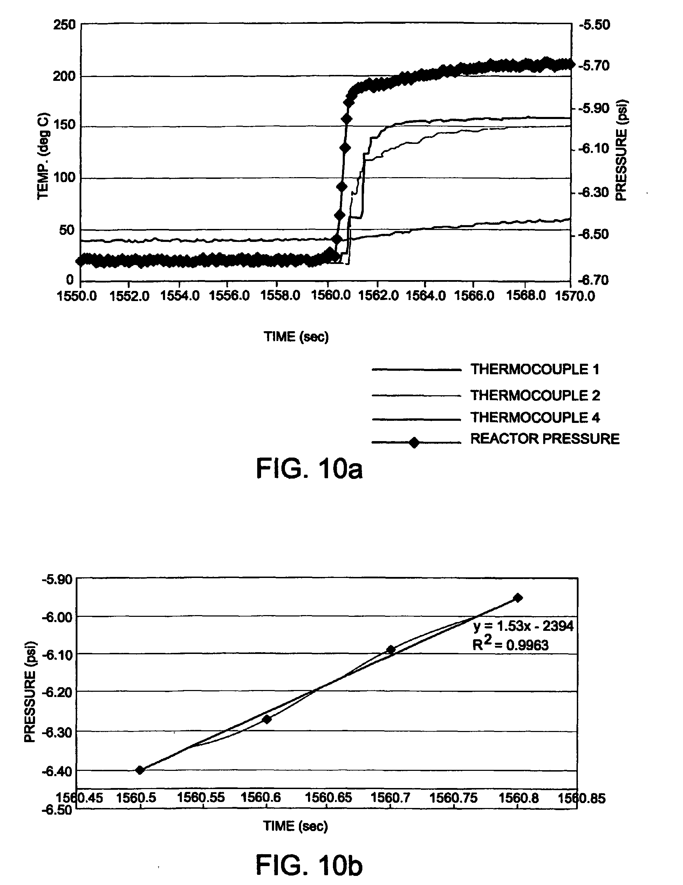

For each tube, multiple cycles were performed. Results from initial runs were discarded because residual oxygen led to spurious results (water formed), but these runs were necessary to condition the coatings. Examples of data are shown in Figs. 10a and 10b. The results of several runs were averaged and the results are presented in the table below. Nitrogen gas and bare stainless steel were used a reference and blank, respectively.

Table 1. Rates of Hydrogen Sorption and Desorption

| Gas | System | Ave. Desorption Rate | Std. Dev. | Ave. Absorption Rate | Std. Dev. |
|---|---|---|---|---|---|
| | | (6.9kPa/s) (PSI/sec) | (6.9kPa/s) (PSI/sec) | (6.9kPa/s) (PSI/sec) | (6.9kPa/s) (PSI/sec) |
| Nitrogen | 0.2687g Electrolytic Pd | 0.748 | 0.064 | 0.511 | 0.034 |
| Nitrogen | 12.0591 g Cermet Pd | 0.736 | 0.028 | 0.591 | 0.017 |
| Hydrogen | 12.0597 g Cermet Pd | 1.333 | 0.159 | 1.087 | 0.032 |
| Nitrogen | 0.2687 g Electrolytic Pd | 0.770 | 0.013 | 0.589 | 0.106 |
| Hydrogen | 0.2687 g Electrolytic Pd | 1.833 | 0.057 | 1.533 | 0.099 |
| Hydrogen | Bare SS | 1.367 | 0.055 | 1.033 | 0.006 |
| Nitrogen | Bare SS | 0.756 | 0.009 | 0.627 | 0.040 |
| Nitrogen | 0.67 micron Electroless Pd. | 0.746 | 0.023 | 0.650 | 0.010 |
| Hydrogen | 0.67 micron Electroless Pd | 1.553 | 0.021 | 1.170 | 0.020 |

Using the reference and blank, the absorption/desorption rates are then corrected for the effect of expansion/ contraction that all gases undergo due to change in temperature. In addition, rates of desorption/absorption on the method blank (a bare stainless steel bar) are subtracted in order to fully examine the effect of palladium.

$$\left[\left(\frac{\Delta p_{H_2,desorption,electroless\,Pd}}{\Delta time}\right)-\left(\frac{\Delta p_{H_2,desorption,SS}}{\Delta time}\right)\right]-\left[\left(\frac{\Delta p_{N_2,desorption,electrolessPd}}{\Delta time}\right)-\left(\frac{\Delta p_{N_2,desorption,SS}}{\Delta time}\right)\right]=$$

$$\frac{\Delta p_{H_2,desorption,electrolessPd,corrected}}{\Delta time}$$

Again, using the electroless palladium system as an example (data from Table 1):

$$[(10.708\ kPa/s)-(9.425\ kPa/s)]-[(5.144\ kPa/s)-(5.213\ kPa/s)] = 1.282\ kPa/s$$

$$(\ [(1.553\ psig/sec)-(1.367\ psig/sec)]-[(0.746\ psig/sec)-(0.756\ psig/sec)] = 0.186\ psig/sec\ )$$

Note that the average desorption rate for nitrogen on palladium is less than the desorption rate for nitrogen on stainless steel. Since the difference (0.07 kPa/s (0.01 psig/sec)) is within the uncertainty for the values, the numbers are assumed to be essentially equal.

In order to propagate the uncertainty, the general error propagation equation is used:

For

$$x = f(u,\ v,\ ...)$$

Then:

$$\sigma_x^2 \cong \sigma_u^2\left(\frac{\partial x}{\partial u}\right)^2 + \sigma_v^2\left(\frac{\partial x}{\partial v}\right)^2 + \cdots$$

Because our equations is essentially X = [A-B] - [C-D], then in this case:

$$\sigma_x^2 = \sigma_A^2\left(\frac{\partial X}{\partial A}\right)^2 + \sigma_B^2\left(\frac{\partial X}{\partial B}\right)^2 + \sigma_C^2\left(\frac{\partial X}{\partial C}\right)^2 + \sigma_D^2\left(\frac{\partial X}{\partial D}\right)^2$$

or...

$$\sigma_X^2 = \sigma_A^2(1)^2 + \sigma_B^2(-1)^2 + \sigma_C^2(1)^2 + \sigma_D^2(-1)^2 = \sigma_A^2 + \sigma_B^2 + \sigma_C^2 + \sigma_D^2$$

finally,

$$\sigma_X = \sqrt{(0.145kPa/s)^2 + (0.379kPa/s)^2 + (0.159kPa/s)^2 + (0.062kPa/s)^2}$$

$$(\sigma_X = \sqrt{(0.021psig/sec)^2 + (0.055psig/sec)^2 + (0.023psig/sec)^2 + (0.009psig/sec)^2}\ )$$

$$\sigma_X = 0.441\,kPa/s \quad (\sigma_X = 0.064\,psig/sec)$$

So the corrected rate of hydrogen desorption for the electroless palladium, system is reported to be 1.282 $\pm$ 0.441 kPa/s (0.186 $\pm$ 0.064 psig/sec). As this is a *change* in pressure, then psig/sec = psia/sec.

The next step is to convert from psia/scc to moles of hydrogen gas released upon desorption. This conversion is accomplished using the ideal gas law, pV = nRT. In this case, ($\Delta$p/dt)V = ($\Delta$n/dt)RT, where ($\Delta$p/dt) is the rate of desorption in psia/sec (calculated above), V is the volume of the reactor (0.620 $\pm$ 0.001 L), ($\Delta$n/dt) is the rate of desorption in moles of hydrogen/sec, R is the ideal gas constant (1.206049 L * psia/mol*K), and T is the desorption temperature (150°C $\cong$ 423 K). So,

$$\frac{\Delta n}{dt} = \frac{(\Delta p/dt)V}{RT} = \frac{(0.186\ \text{psia}/\text{sec})(0.620L)}{\left(\dfrac{1.206049L \bullet \text{atm}}{\text{mol} \bullet K}\right)(423K)} = 0.000226\ \text{mol}/\text{sec}$$

Error is again propagated using the general error propagation equation, and this value is reported as (2.26 $\pm$ 0.78) x10$^{-4}$ mol H$_2$/sec. For the electroless palladium system, the mass of palladium plated onto the bar was determined with an electronic balance to be 0.0661 $\pm$ 0.0001 g. Because palladium has a known density of 12.02 g/cm$^3$, the volume of palladium plated is calculated using

$$V_{Pd} = \frac{Mass_{Pd}}{Density_{Pd}} = \frac{0.0661\,g}{12.02\left(\dfrac{g}{\text{cm}^3}\right)} = 0.005499\ \text{cm}^3\ \text{Pd}$$

As before, error is propagated and the volume of palladium plated is reported as (5.50 $\pm$ 0.01) x10$^{-3}$ cm$^3$. The amount of hydrogen gas produced per second per cubic centimeter of palladium, $\beta$, can now be calculated,

$$\beta = \frac{dn/dt}{V_{Pd}} = \frac{(0.000226\ \text{mol}\,H_2/\text{sec})}{(0.00550\ \text{cm}^3\ \text{Pd})} = \frac{0.0411\,\text{mol}\,H_2}{\text{sec} \bullet \text{cm}^3\ \text{Pd}}$$

After error propagation, $\beta$ is reported to be (4.11 $\pm$ 1.41) x 10$^{-2}$ mol H$_2$/sec * cm$^3$ Pd.

From Figure 10a, the approximate desorption time is $\cong$ 0.6 seconds. This value is recorded, and then along with the desorption time for cycles five and six, an average desorption time is calculated. For the electroless palladium system, the average desorption time is 0.6 $\pm$ 0.1 seconds. It is now possible to calculate the moles of hydrogen released upon desorption per cycle per cubic centimeter of palladium, $\varepsilon$,

$$\varepsilon = \beta \times \text{Cycle Time} = \left(\frac{0.0411\,\text{mol}\,H_2}{\text{sec} \bullet \text{cm}^3}\right) \times 0.6\,\text{seconds} = \frac{0.0247\,\text{mol}\,H_2}{\text{cycle} \bullet \text{cm}^3}$$

After error propagation, $\varepsilon$ = (2.47 $\pm$ 0.94) x10$^{-2}$ mol H$_2$/cycle*cm$^3$ Pd.

Knowing the cycle time, it is possible to calculate the theoretical number of desorption cycles per day, $\nu$,

$$\nu = \frac{(\text{seconds}/\text{day})}{(\text{seconds}/\text{cycle})} = \frac{(86400\ \text{seconds}/\text{day})}{(0.6\ \text{seconds}/\text{cycle})} = 144000\ \text{cycles}/\text{day}$$

which is reported as $\nu$= 144000 $\pm$ 24000 cycles/day.

Finally, the standard cubic feet of hydrogen released per day per cubic centimeter of palladium, $\phi$, can be

calculated:

$$\varphi = \varepsilon v \left(\frac{22.4\,\text{L H}_2}{\text{mol H}_2}\right)\left(\frac{0.0353\,\text{scf H}_2}{\text{L H}_2}\right) = \left(\frac{0.0247\,\text{mol H}_2}{\text{cycle} \bullet \text{cm}^3}\right)\left(\frac{144000\,\text{cycle}}{\text{day}}\right)\left(\frac{22.4\,\text{L H}_2}{\text{mol H}_2}\right)\left(\frac{0.0353\,\text{scf H}_2}{\text{L H}_2}\right)$$

$$\varphi = \frac{79.64\,\text{m}^3\,\text{H}_2}{\text{day} \bullet \text{cm}^3\,\text{Pd}} \quad \left(\varphi = \frac{2812\,\text{scf H}_2}{\text{day} \bullet \text{cm}^3\,\text{Pd}}\right)$$

After error propagation, this value is reported to be:

$$\phi = (79.6 \pm 33.1)\,\text{m}^3\,\text{H}_2/\text{day*cm}^3\,\text{Pd} \quad (\phi = (2.81 \pm 1.17) \times 10^3\,\text{scf H}_2/\text{day*cm}^3\,\text{Pd}).$$

Thus, in order to desorp 28,320 $m^3$ (one million standard cubic feet) of hydrogen per day, the required amount of palladium, $V_{Pd.MSCF}$, is:

$$V_{Pd.MSCF} = \frac{(1000000\,\text{scf H}_2/\text{day})}{\varphi} = \frac{(1000000\,\text{scf H}_2/\text{day})}{(2810\,\text{scf H}_2/\text{day} \bullet \text{cm}^3\,\text{Pd})} = 356\,\text{cm}^3\,\text{Pd}$$

reported as $(3.56 \pm 1.48) \times 10^2$ $cm^3$ Pd. Converting this value to mass of palladium, $m_{Pd.MSCF}$,

$$m_{Pd.MSCF} = V_{Pd.MSCF} \times \text{Density}_{Pd} = (356\,\text{cm}^3\,\text{Pd}) \times (0.01202\,\text{kg/cm}^3\,\text{Pd}) = 4.28\,\text{kg Pd}$$

reported as $4.28 \pm 1.79$ kg Pd. These calculations were repeated for absorption, and for the electrolytic palladium system.
For the following conditions:

Initial pressure = -48.26 +/- 0.34 kPa (-7.00 +/- 0.05 psig)

Initial Temperature= 298 +/- 3 K

$\Delta T$ for desorption = +139 K (423 K) (150°C)

$\Delta T$ for absorption = - 139 K (284 K) (11°C)

Electrolessly plated Palladium (on stainless steel):

desorption rate= $(79.6 \pm 33.1)$ $m^3$ $H_2/(day*cm^3$ Pd)
$((2.81 \pm 1.17) \times 10^3$ scf $H_2/(day*cm^3$ Pd))

$m_{Pd.MSCF} = 4.28 \pm 1.79$ kg Pd

$$\text{absorption rate} = (72.2 \pm 38.5) \text{ m}^3 \text{ H}_2/(\text{day*cm}^3 \text{ Pd})$$
$$((2.55 \pm 1.36) \times 10^3 \text{ scf H}_2/(\text{day*cm}^3 \text{ Pd}))$$

$$m_{Pd,MSCF} = 4.71 \pm 2.51 \text{ kg Pd.}$$

$$\text{single cycle desorption} = (2.47 \pm 0.94) \times 10^{-2} \text{ mol H}_2/\text{cm}^3 \text{ Pd}$$

$$\text{single cycle absorption} = (4.11 \pm 1.82) \times 10^{-2} \text{ mol H}_2/\text{cm}^3 \text{ Pd}$$

Electroless system characteristics:
0.0661 g Pd = 5.50 x 10⁻³ cm³ Pd = 6.211x10⁻⁴ mol Pd = 0.672 micron thickness over an area of 81.79 cm². Desorption Cycle Time = 0.6 ± 0,1 sec. Absorption Cycle Time= 1.1 ± 0.2 sec.
Electrolytically plated Palladium (on low carbon steel):

$$\text{desorption rate} = (49.0 \pm 13.9) \text{ m}^3 \text{ H}_2/(\text{day*cm}^3 \text{ Pd})$$
$$((1.73 \pm 0.49) \times 10^3 \text{ scf H}_2/(\text{day*cm}^3 \text{ Pd}))$$

$$m_{Pd,MSCF} = 6.95 \pm 1.97 \text{ kg Pd}$$

$$\text{absorption rate} = (78.4 \pm 21.5) \text{ m}^3 \text{ H}_2/(\text{day*cm}^3 \text{ Pd})$$
$$((2.77 \pm 0.76) \times 10^3 \text{ scf H}_2/(\text{day*cm}^3 \text{ Pd}))$$

$$m_{Pd,MSCF} = 4.34 \pm 1.19 \text{ kg Pd}$$

$$\text{single cycle desorption} = (2.03 \pm 0.51) \times 10^{-2} \text{ mol H}_2/\text{cm}^3 \text{ Pd}$$

$$\text{single cycle absorption} = (3.64 \pm 0.91) \times 10^{-2} \text{ mol H}_2/\text{cm}^3 \text{ Pd}$$

Electrolytic system characteristics:
0.2687 g Pd = 2,235 x 10⁻² cm³ Pd = 2.525 x 10⁻³ mol Pd = 2.80 micron thickness over an area of 79.80 cm². Desorption Cycle Time = 0.8 ± 0.1 sec. Absorption Cycle Time = 0.9 ± 0.1 sec.
In addition, it was discovered that the sorption/desorption rates for hydrogen gas in the current invention increase with partial pressure of the hydrogen ($P_{H2}$). This increase in rate with $P_{H2}$ is illustrated in Table 2 where two sets of sorption/desorption data are compared in which the $P_{H2}$ of the feed gas was varied by about a factor of 2.17.

Table 2:

| Sorbent | $P_{H2}$ (6.9 kPa) (psia) | Observed Sorption Rate (6.9kPa/s) (psi/sec) | Observed Desorption Rate (6.9kPa/s (psi/sec) | Temperature Jump Range (°C) |
|---|---|---|---|---|
| Pd-P alloy (prepared by electroless plating) | 7.600 | 1.170 | 1.553 | 107 |
| Pd-P alloy (prepared by electroless plating) | 16.526 | 2.364 | 2.654 | 83 |

Although we do not wish to be bound by any theories, this unexpected results for the desorption case, which normally may not be expected to show a $P_{H2}$ dependence (Laidler, K.J., "Chemical Kinetics", McGraw-Hill (New York, NY), 1965, p259ff), is suspected might be due to the higher loading of $H_2$ in the sorbent during the sorption cycle. This feed pressure benefit is significant as the higher rate allows even lower temperature jump ranges to be employed to practice the invention. Such shorter jump times reduces process cycle times and heat transfer requirements, thereby decreasing energy requirements and increasing the productivity of purified hydrogen for a given apparatus design and configuration.

**Calculated Example Comparing A Conventional Staged Sorption Device Vs. A Microchannel-Based Staged Sorption Device**

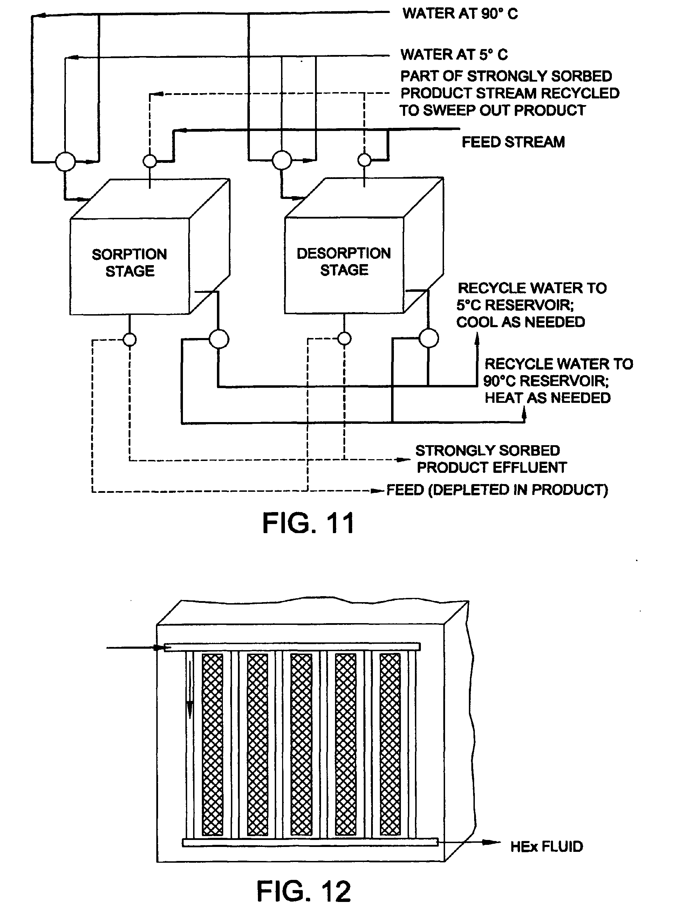

A staged microchannel thermal swing sorption device is shown in Figures 11 and 12. The total sorption time for this two-stage device is slightly less than 1 second, where the sorption time is set between 0.4 sec and 1 sec. For the example design, a sorption time of 0.6 sec is selected. The anticipated results, including sorption times and hardware volume of this device are compared to reported values for a cyclic sorption device described in the literature. For clarity, a sorption time is defined in this example as the time during which the feed flows through one stage as a means for comparing devices that require different numbers of stages to achieve a given separation.

The sorption time in the conventional 4-stage sorption device was on the order of 60 seconds, and the sorption time in 2-stage the microchannel device is 0.6 seconds. This 100x improvement also comes with a reduction in the active sorbent volume. The total sorbent hardware volume in the conventional example is roughly 3 cubic inches and the required sorbent loading was 38 gm. In the microchannel sorption device (that also handles an increase in the solute level of 5x over the conventional example), the required active sorbent volume was 0.6 cubic inches and the required sorbent loading is 0.89 gm. This inventive example shows a 50x reduction in the amount or weight of active sorbent agent required to achieve a given separation. This example also shows a reduction in the sorbent volume of over 5x.

Further improvements arc possible through optimization of the design variables.

**Conventional staged sorption device**

A conventional staged sorption device was described by Tonkovich and Carr in 1996. The separation of propylene from dimethyl ether in a gaseous solution also containing nitrogen was achieved by moving the feed point past fixed sorption beds.

Stages were comprised of a conventional packed bed of 60/80 mesh pellets of Alltech Chromosorb 101. At ambient conditions, the dimethyl ether is more strongly sorbed than the propylene. Nitrogen does not sorb under these conditions. For the described system of either 3 or 4 stages (optimal), each column contains roughly 9.5 g of sorbent placed in 0.5" OD 12" long stainless steel tubes. A typical void fraction of 0.4 for a packed bed is assumed. At a nitrogen flowrate of 500 mL/min, the breakthrough time for dimethyl ether is 102 sec, and for propylene is 42 seconds. The inlet mole fraction of propylene was 0.035, and the inlet mole fraction of dimethyl ether is 0.01. The total flowrate was roughly 523 mL/min. At this flowrate and bed volume, the dead time within an individual stage (column) was on the order of 0.5 sec. The goal of this device was to produce two ultrahigh purity product streams for this dilute multi-component mixture.

The described process required the addition of an additional column and isolated purge gas to completely desorb residual amounts of the strongly sorbed solute (dimethyl ether) from the column (stage) immediately prior to a feed switching to create an ideally clean column. Sorption times, or the time at which the feed is switched to an adjacent column, experimentally ranged from 50 to 81 seconds. In all cases, the feed switching time must be set between the breakthrough times of the solutes to be separated.

In the example of a ternary separation or higher, the feed switching time would be ideally selected at a value whose multiple would make successive feed switchings fall between successive separated solutes. As an example, if an additional solute C was added to the binary separation mixture of dimethyl ether and propylene, such that its breakthrough time was 200 seconds, then the selection of a switching time of 80 seconds would be sufficient. In the first stage, the propylene would be separated from a mixture of dimethyl ether and C. In the second stage at a time of 160 seconds, the dimethyl ether would elute from the stage leaving the very strongly sorbed C behind. In the final stage at a time of 240 seconds, the very strongly sorbed C would elute and be removed from the system.

In summary, for this example a total sorbent weight of 38 gm was required to separate the binary mixture of propylene and dimethyl ether. The total sorbent volume was roughly 3 cubic inches or 49 cubic centimeters.

**Microchannel-based staged sorption device**

The use of a microchannel-based thermal swing sorption device will have distinct advantages over the system described in the literature. Initially, the use of thermal swing sorption will reduce the likelihood of requiring an additional purge column for the express purpose of cleaning a stage prior to a feed switching. By heating the desorption stage, the strongly sorbed dimethyl ether will elute more quickly. The other distinct advantage of the thermal swing microchannel-based separation is the decreased sorption and desorption time (and thus decreased hardware and sorbent volume).

An envisioned device design is shown in Figures 10 and 11. A stage in the microchannel device is a parallel array of 5 identical interleaved sorbent-containing microchannels with 6 heat exchange microchannels. The sorbent-containing microchannels may be filled with a flow-through engineered sorbent. The sorbent is 0.03" wide (750 microns) and placed in an aluminum device next to adjacent microchannel heat exchange channels.

The same active sorbent agent, Chromosorb 101 is deposited or coated on a porous nickel or aluminum foam. Each sorption microchannel is 2 in long, and 1 in high. The total volume of a sorbent-containing microchannel is 0.06 cubic inches, or about 1 cubic centimeter. The volume is nearly completely filled with the porous engineered sorbent. The engineered sorbent substrate (porous nickel or aluminum) is roughly 90% porous, and 10% metal. It is envisioned to coat the engineered sorbent substrate with Chromosorb 101 to a weight loading of 10% (that is sorbent is added up to 10% of the metal weight). The total weight of active sorbent in one channel of the new system is now 1 cc x 8.9 gm/cc x 0.1 metal density x 0.1 sorbent loading ~ 0.089 gm of sorbent. The sorbent loading for one stage consisting of 5 channels is 0.445 gm. The total sorbent loading for the entire 2-stage device is 0.89 gm. This loading per stage is roughly 4.7% of the per-stage loading in the literature example. The total loading for the microchannel device is roughly 2.3% of the loading in the literature example.

In the conventional device a sorbent loading of 9.5 gm gave a propylene breakthrough time of 42 seconds for a feed mixture of 0.035-mole fraction in a total flow stream of 523 mL/min. Subtracting the dead time for the system of 0.5 second in the stage and an estimated 0.5 second in the interconnecting pipes, gives a sorbent capacity of 0.035 x 523 mL/min / 9.5 gm x 41 seconds equals 1.32 mL of propylene per gm of sorbent. For the dimethyl ether, the sorbent capacity equals 0.01 x 523 mL/min / 9.5 gm x 101 seconds, or 0.93 mL of dimethyl ether per gm of sorbent.

The anticipated breakthrough time, for a mixture of 0.175 mole fraction propylene, 0.05 mole fraction dimethyl ether, and 0.775 mole fraction nitrogen flowing at about 523 mL/min at room temperature over a sorbent weight of 0.445 gm per stage is about 0.39 sec for propylene, and about 0.95 second for dimethyl ether based upon using similar sorbent capacities calculated from the reported values in Tonkovich and Carr 1996.

In the microchannel device, it is anticipated that the sorption cycle will occur at room temperature, while the desorption cycle will occur at a higher temperature. It is anticipated that a temperature rise of 20 to 50 °C should be sufficient to drive off the sorbed dimethyl ether during the desorption cycle. Heating and cooling will be achieved through the use of a liquid heat transfer fluid, water, to reduce the convective resistance to heat transfer. During the sorption cycle, water at 5 °C will enter the adjacent interleaved heat transfer microchannels to reduce the temperature to 20 °C in the sorption stage. During the desorption cycle, water at 90 °C will flow through the adjacent interleaved microchannel heat transfer channels to raise the temperature of the desorption stage to 40 °C.

The feed switching time must be set between the breakthrough times of the two solutes (0.39 sec and 0.95 sec), and is selected at 0.6 sec. At this switching time, there is sufficient time for the heat transfer fluid to cool and heat the sorption and desorption stage respectively.

**Time for mass transfer in the microchannel-based sorption device:**

The characteristic time for mass transfer in a microchannel based engineered sorbent is defined in (21). The average size of the pore opening in a porous nickel or aluminum foam is between about 200 and 250 microns. The diffusivities of propylene and dimethyl ether in a nitrogen solution at room temperature and 1 atm are about 0.1 cm$^2$/s and 0.12 cm$^2$/s respectively as calculated by the Chapman-Enskog theory. Using an average value of 0.11 cm$^2$/s, the characteristic mass transfer time for both solutes is about 0.02 seconds. For this example, a feed switching time of 0.6 seconds, will provide on the order of 30 equilibrium stages for separation. This is more than sufficient to achieve a good separation of the two solutes in a microchannel.

$$\tau_{eng-sorbent} = \frac{x^2}{D_e} = \frac{0.025^2\,cm^2}{\frac{0.11cm^2/s}{3}} = 0.017 \text{ seconds} \sim 0.02 \text{ seconds}$$

(21)

**Time for heat transfer in the microchannel-based sorption device:**

For the microchannel-based sorption system that is dominated by conduction resistance not convection resistance (e.g., a liquid heat transfer fluid not a gaseous heat transfer fluid), then the characteristic time for heat transfer is defined by equation (22-24).

The temperature of the sorption and desorption stages are cycled between 20 °C and 40 °C respectively through the use of a heat transfer fluid that is cycled between 5 °C and 90 °C respectively.

$$y_{sorption} = \frac{T - T_{ss}}{T0 - T_{ss}} = \frac{20C - 5C}{90C - 5C} = 0.18 \qquad (22)$$

$$y_{desorption} = \frac{T - T_{ss}}{T0 - T_{ss}} = \frac{40C - 90C}{5C - 90C} = 0.59 \qquad (23)$$

$$t = (factor)(x2)/alpha \qquad (24)$$

**Characteristic time for heat transfer during Sorption:**

The conduction time through the metal web between the heat transfer channel and the sorbent containing microchannel is shown in equation (25), where x = 0.00025 m, alpha = 9.16 x $10^{-5}$ m$^2$/s for an aluminum web. The conduction time through the engineered sorbent is shown in Equation (26), where x = 0.000375 m (half width of engineered sorbent because of heat transfer symmetry between the the interleaved microchannels) and alpha is roughly 4 x $10^{-5}$ m$^2$/s. The "factor" is determined from empirical heat transfer curves for conduction-limited heat transfer in a rectangular channel.

$$t = 0.8 \frac{0.00025^2 \, m^2}{9.16x10^{-5} \, \frac{m^2}{s}} = 0.0005 \text{ sec} \qquad (25)$$

$$t = 0.8 \frac{0.000375^2 \, m^2}{4x10^{-5} \, \frac{m^2}{s}} = 0.0028 \text{ sec} \qquad (26)$$

The total characteristic time for heat transfer through the engineered sorbent is less than about 0.003 second during the sorption cycle for the temperatures described in this example. This implies that a fast switch of the heat exchange fluid at the start of a 0.6-sec sorption cycle will take less than 0.5% of the total time for sorption.

**Characteristic time for heat transfer during Desorption:**

The total characteristic time for heat transfer during the desorption cycle through the metal web between the heat exchange microchannel and the engineered sorbent is shown in Equation (27). The time for conduction through the engineered sorbent is shown in Equation (28). The total time for conduction during the desorption cycle is less than about 0.003 seconds. This implies that a fast switch of the heat exchange fluid at the start of a 0.6-second sorption cycle will take less than 0.5% of the total time for desorption.

$$t = 0.7 \frac{0.00025^2 \, m^2}{9.16 x 10^{-5} \frac{m^2}{s}} = 0.0005 \text{ sec} \qquad (27)$$

$$t = 0.7 \frac{0.000375^2 \, m^2}{4 x 10^{-5} \frac{m^2}{s}} = 0.0025 \text{ sec} \qquad (28)$$

**Estimation of dead time during cycle**

The full cycle time for this device will need to include the dead time in addition to the time for sorption and desorption. Immediately after a feed switching, there will take an amount of time for the coolant stream (in the case of sorption) or hot stream (in the case of desorption) to travel from the 4-way solenoid valve (configuration shown in Figure A), through the interconnecting pipes, through the header and finally through the microchannel itself As an example, an ASCO solenoid valve may be conveniently used at a cycle rate of 30 Hz.

For a total coolant flowrate of 10 L/min, an estimated time for convection through the heat transfer microchannels (0.05 cm (0.02") wide, and same height and length as sorbent microchannel) is calculate as the volume divided by the flowrate. The channel volume is 5.08 cm (2 in) x 2.54 cm (1 in ) x 0.05 cm. (0.02") = 0.02 cubic inches, or 0.13 cubic centimeters. The flowrate through an individual heat exchange microchannel (assuming 5 sorbent microchannel interspersed within 6 heat transfer microchannels) is roughly 1667 mL/min. The time for convective flow through an individual parallel heat transfer microchannel is about 0.005 sec.

The time for convective flow through the header is estimated, by dividing the header volume by the total flowrate (10 L/min). The header volume is estimated as the height of the face (2.54 cm (1")) x a header depth required for uniform flow distribution (0.635 cm (0.25")) x the width of the array of channels (6 x 0.05 cm (0.02") + 5 x 0.07 cm (0.03") + 10 webs x 0.025 cm (0.01") = 0.94 cm (0.37")), which equals 0.09 cubic inches or about 1.5 cubic centimeters. The dead time in the header is 1.5 cubic centimeters divided by 10 L/min, which equals about 0.009 sec.

The time for convection in the interconnecting pipes from the 4-way solenoid valve is estimated as a (2.54 cm (1")) flow length for a 3/8th in pipe. The total volume is 0.0352 cubic inches or 0.58 cubic centimeters. The dead time for convection through this pipe is roughly 0.004 seconds.

The total dead time on the heat transfer side is 0.005 sec for convection through the channels, plus 0.009 sector convection through the header, plus 0.004 sec for convection through the interconnecting pipes. The total dead time is roughly 0.018 sec.

For a total cycle time of 0.6 sec, roughly 0.018 seconds is wasted as part of the dead time on the heat transfer side. This equates to roughly 3% of the total cycle time, which is acceptable.

If a lower flowrate is desired for the heat transfer fluid, then the dead time on the heat transfer side will be a larger percentage of the total cycle time. However, further elimination of volume in either the flow header and/or the interconnecting pipes could reduce transfer side dead time.

In summary, the microchannel-based sorption device requires 0.445 gm of sorbent per stage, for a total sorbent volume of 0.89 gm per system. The cycle time selected is 0.6 sec.

**Claims**

1.   A method of separating a fluid component from a fluid mixture comprising:

a first step comprising sorbing a fluid component, this first step comprising passing a fluid mixture (702) into a flow channel (2, 704) at a first temperature;
wherein the flow channel (2, 704) comprises a sorbent (6, 706) within the channel, the fluid mixture (702) contacting the sorbent (6, 706) without passing through a contactor, and
wherein the flow channel (2, 704) has a length direction along the net flow direction of the fluid mixture (702) in the flow channel (2, 704) from an inlet to an outlet, and wherein the flow channel (2, 704) has a height of 1 cm or less; and
transferring heat from the sorbent (6, 706) to a microchannel heat exchanger(10, 710) in thermal contact with said flow channel (2,704);

a second step comprising increasing the temperature of the sorbent surface (8), this second step comprising adding energy from an energy source; and

a third step comprising desorbing a fluid component from the sorbent, (6, 706) at a second temperature and obtaining a fluid component that was sorbed in the first step, wherein the second temperature is higher than the first temperature.

2. The method of claim 1, **characterized in that** the flow channel (2, 704) has a surface exposed to the fluid mixture (702) and comprises the sorbent (6, 706) on at least a portion of the surface.

3. The method of any of claims 1 to 2, **characterized in that** the second and third step occur simultaneously.

4. The method of any of claims 1 to 3, **characterized in that** it further comprises a step, that follows the third step, of removing heat from the flow channel (2, 704) into a microchannel heat exchanger (10, 710).

5. The method of any of claims 1 to 4, **characterized in that** the three steps are repeated over multiple cycles, wherein each cycle takes less than 10 seconds for a gaseous solution, or less than 1000 seconds for a liquid solution.

6. The method of any of claims 1 to 5, **characterized in that** said sorbent (6, 706) is a monolithic porous insert.

7. The method of any of claims 1 to 6, **characterized in that** the first and second steps, combined,
for a non-condensed fluid mixture take 10 seconds or less and wherein at least 20% of the gaseous component sorbed in the first step is desorbed from the sorbent (6, 706); or
for a liquid mixture take 1000 seconds or less and wherein at least 20% of the fluid component sorbed in the first step is desorbed from the sorbent (6, 706).

8. The method of claim 7, **characterized in that** when substantially all the fluid flowing through the flow channel (2, 704) is flowing through the sorbent (6; 706), the sorbent (6, 706) is porous.

9. The method of any of claims 1 to 8, **characterized in that** it comprises:

passing a fluid mixture (702) into a first sorption region at a first temperature and first pressure, wherein the first sorption region comprises a first sorbent and wherein the temperature and pressure in the first sorption region are selected to favor sorption of the fluid component into the first sorbent in the first sorption region; transferring heat from the first sorption region into a microchannel heat exchanger (10, 710) and selectively removing the fluid component from said fluid mixture thus resulting in a sorbed component in the first sorbent and a fluid mixture that is relatively depleted in said component;
passing the relatively component-depleted fluid mixture into a second sorption region at a second temperature and second pressure, wherein the second sorption region comprises a second sorbent and wherein the temperature and pressure in the second sorption region are selected to favor sorption of the fluid component into the sorbent in the second sorption region; transferring heat from the second sorption region into a microchannel heat exchanger (10, 710) and selectively removing the fluid component from said relatively component-depleted fluid mixture thus resulting in sorbed component in the second sorbent and a relatively more component-depleted gas mixture;
wherein the second temperature is different than the first temperature;
adding heat to the first sorbent, through a distance of about 1 cm or less to substantially the entire first sorbent, to raise the first sorbent to a third temperature and desorbing said component from the first sorbent;
adding heat to the second sorbent, through a distance of about 1 cm or less to substantially the entire second sorbent, to raise the second sorbent to a fourth temperature and desorbing said component from the second sorbent; and
obtaining the component desorbed from the first and second sorbents.

10. The method of claim 9, **characterized in that** the second pressure is different from the first pressure.

11. The method of any of claims 9 and 10, **characterized in that** the first sorbent is a porous sorbent.

12. The method of any of claims 9 to 11, **characterized in that** the component desorbed from the first and second sorbents is recycled back into the first sorption region.

13. The method of any of claims 9 to 12, **characterized in that** the fluid mixture (702) is a hydrogen-containing gas mixture, and the fluid component is hydrogen.

14. The method of claim 13, **characterized in that** flow through the channel is constrained such that in at least one cross-sectional area of the channel, the farthest distance from any point to a channel wall is less than 0.5 cm; and wherein the step of sorbing hydrogen gas is conducted at a rate of at least 0.01 mmol of $H_2$/(second)($cm^3$ of sorbent).

15. The method of any of claims 13 and 14, **characterized in that** the sorbent comprises a surface of palladium or a palladium alloy that is exposed to gas.

16. The method of any of claims 13 to 15, wherein the hydrogen obtained is not compressed.

17. The method of any of claims 13 to 16, **characterized in that** the second step comprises increasing temperature at a rate of at least 100 °C per second.

18. The method of claim 17, **characterized in that** the rate of desorption in the third step is increased by using a heated sweep gas.

19. The method of any of claims 13 to 18, **characterized in that** it comprises heating down the length of a channel to drive off sorbed gas while introducing feed to the beginning of the channel.

20. The method of claim 19, **characterized in that** the method produces a product gas and the product gas obtained has a hydrogen purity at least 10 times greater than the hydrogen-containing gas mixture, and the method produces hydrogen at a rate of at least 56.64 $m^3$ (2000 scf) $H_2$ per cc of sorbent per day.

21. The method of any of claims 13 to 20, **characterized in that** the second and third steps, combined, take 10 seconds or less and wherein at least 20% of the hydrogen sorbed in the first step is desorbed from the sorbent.

22. The method of any of claims 13 to 21, **characterized in that** the sorbent comprises a layer of Pd overlying a hydrogen sorbent for selectively sorb hydrogen into the sorbent, and the sorbent is brought to a temperature at least 5°C higher than the first temperature, so that the desorbed hydrogen is obtained in a higher purity form than the gas mixture.

23. The method of claim 22, **characterized in that** the first step occurs in a first stage, and wherein the hydrogen obtained from the second step is recycled into first stage, and the first and second steps are repeated.

24. A fluid separation apparatus, **characterized in that** it comprises:

a first array of flow channels (2, 704);
the first array of flow channels comprising:

at least two flow channels;
each of the at least two flow channels comprising an inlet, an outlet and a sorbent disposed between the inlet and the outlet;
each of the at least two flow channels in thermal contact with a microchannel heat exchanger (10, 710);
each of the at least two flow channels having a height of 1 cm or less, wherein the height is in a direction toward a microchannel heat exchanger; and
at least one array inlet and at least one array outlet; and

a second array of flow channels (2, 704);
the second array of flow channels comprising:

at least two flow channels;
each of the at least two flow channels comprising an inlet, an outlet and a sorbent disposed between the inlet and the outlet;
each of the at least two flow channels in thermal contact with a microchannel heat exchanger (10, 710);
each of the at least two flow channels having a height of 1 cm or less, wherein the height is in a direction toward a microchannel heat exchanger; and

at least one array inlet and at least one array outlet;

at least one fluid conduit connecting the outlet of the first array to the inlet of the second array; and
a valve capable of controlling the flow through the conduit.

25. The apparatus of claim 24, **characterized in that** the at least one array inlet in the first array is the same inlet as a flow channel inlet in the first array.

26. The apparatus of claim 24 or 25 for carrying out the separation of hydrogen from a hydrogen-containing gas mixture according to claim 13, **characterized in that** the apparatus further comprises:

a flow channel having an internal surface that comprises palladium on at least a portion of the internal surface.

27. The apparatus of claim 26, **characterized in that** it comprises a sorbent layer on a wall of the flow channel and further comprising an open channel within the flow channel.

28. The apparatus of claim 27, **characterized in that** the open channel has a height of 0.1 mm or less.

29. The apparatus of claim 28, **characterized in that** it comprises a porous sorbent monolithic insert within the flow channel, and wherein the internal surface comprises the surface of the porous sorbent.

30. The apparatus of claim 29, **characterized in that** the porous sorbent comprises a thermally-conductive felt or thermally-conductive continuously porous foam.

31. The apparatus of any of claims 29 and 30, **characterized in that** the porous sorbent substantially fills the flow channel.

32. The apparatus of any of claims 26 to 31, **characterized in that** the palladium is a palladium-silver alloy.

33. The apparatus of any of claims 26 to 32, **characterized in that** it comprises: at least four layers, each of said at least four layers comprising a microchannel heat exchanger; alternating with
at least three layers comprising at least one flow channel in each of said at least three layers.

34. The apparatus of any of claims 26 to 33, **characterized in that** the sorbent comprises a hydrogen sorbent having a surface coating over more than 90% of the surface of the hydrogen sorbent, wherein the surface coating comprises palladium and wherein the sorbent has a thickness of 0.0001 to 1 mm.

35. The apparatus of any of claims 26 to 34 **characterized in that** the sorbent comprises a promoter on the surface of the sorbent.

36. The apparatus of any of claims 26 to 35, **characterized in that** it comprises at least one first gas inlet to a first at least three layers, wherein each layer comprises at least one flow channel;
at least one first gas outlet from said first at least three layers comprising at least one flow channel;
said at least one first gas outlet connected to at least one second gas inlet to a second at least three layers comprising at least one flow channel;
at least one second gas outlet from said second at least three layers, wherein each layer comprises at least one flow channel; and further comprising
a first at least four layers alternating with said first at least three layers, each of said first at least four layers comprising a microchannel heat exchanger; and
a second at least four layers alternating with said second at least three layers, each of said second at least four layers comprising a microchannel heat exchanger.

37. The apparatus of claim 24, wherein the flow channels are in fluid communication with a component-depleted fluid channel and a component-rich fluid channel through a valve.

38. The apparatus of claim 26, wherein the flow channel is in fluid communication with a component-depleted fluid channel and a component-rich fluid channel through a valve.

39. A method of using the apparatus of any of claims 24 and 25, comprising:

sorbing a fluid component in the first array, and, simultaneously,
desorbing a fluid component in the second array.

**40.** A use of the apparatus of any of claims 26 to 38 to purify hydrogen from a hydrogen-containing gas mixture.


**Patentansprüche**

**1.** Verfahren zum Trennen eines Fluids von einer Fluidmischung, das Folgendes umfasst:

einen ersten Schritt, bei dem eine Fluidkomponente sorbiert wird, wobei dieser erste Schritt die Leitung einer Fluidmischung (702) in einen Flusskanal (2, 704) bei einer ersten Temperatur umfasst;
wobei der Flusskanal (2, 704) im Kanal ein Sorbens (6, 706) umfasst, und die Fluidmischung (702) mit dem Sorbens (6, 706) in Kontakt tritt, ohne einen Kontaktor zu durchlaufen, und
wobei der Flusskanal (2, 704) eine Längsrichtung entlang der Nettoflussrichtung der Fluidmischung (702) im Flusskanal (2, 704) von einem Einlass zu einem Auslass hat, und wobei der Flusskanal (2, 704) eine Höhe von 1 cm oder weniger hat; und
wobei Wärme vom Sorbens (6, 706) zu einem Mikrokanal-Wärmetauscher (10, 710), der thermischen Kontakt mit dem besagten Flusskanal (2, 704) hat, übertragen wird;
einen zweiten Schritt, bei dem die Temperatur der Sorbensoberfläche (8) erhöht wird, wobei bei diesem zweiten Schritt Energie von einer Energiequelle zugeführt wird; und
einen dritten Schritt, bei dem eine Fluidkomponente bei einer zweiten Temperatur vom Sorbens (6, 706) desorbiert wird und eine Fluidkomponente erhalten wird, die im ersten Schritt sorbiert wurde, wobei die zweite Temperatur höher als die erste Temperatur ist.

**2.** Verfahren nach Anspruch 1, **dadurch gekennzeichnet, dass** der Flusskanal (2, 704) eine Oberfläche besitzt, die der Fluidmischung (702) ausgesetzt ist und in mindestens einem Teil der Oberfläche das Sorbens (6, 706) umfasst.

**3.** Verfahren nach einem der Ansprüche 1 bis 2, **dadurch gekennzeichnet, dass** der zweite und dritte Schritt gleichzeitig ablaufen.

**4.** Verfahren nach einem der Ansprüche 1 bis 3, **dadurch gekennzeichnet, dass** dieses einen weiteren Schritt umfasst, der dem dritten Schritt folgt, in dem Wärme vom Flusskanal (2, 704) in einen Mikrokanal-Wärmetauscher (10, 710) entzogen wird.

**5.** Verfahren nach einem der Ansprüche 1 bis 4, **dadurch gekennzeichnet, dass** die drei Schritte über mehrere Zyklen wiederholt werden, wobei jeder Zyklus bei einer gasförmigen Lösung weniger als 10 Sekunden und bei einer flüssigen Lösung weniger als 1.000 Sekunden dauert.

**6.** Verfahren nach einem der Ansprüche 1 bis 5, **dadurch gekennzeichnet, dass** das besagte Sorbens (6, 706) eine monolithische, poröse Einlage ist.

**7.** Verfahren nach einem der Ansprüche 1 bis 6, **dadurch gekennzeichnet, dass** der erste und zweite Schritt zusammen
für eine nicht kondensierte Fluidmischung 10 Sekunden oder weniger dauern und wobei mindestens 20 % der gasförmigen Komponente, die im ersten Schritt sorbiert wurde, vom Sorbens (6, 706) desorbiert wird; oder
für eine flüssige Mischung 1.000 Sekunden oder weniger dauern und wobei mindestens 20 % der Fluidkomponente, die im ersten Schritt sorbiert wurde, vom Sorbens (6, 706) desorbiert wird.

**8.** Verfahren nach Anspruch 7, **dadurch gekennzeichnet, dass** das Sorbens (6, 706) porös ist, wenn im Wesentlichen das gesamte Fluid, das durch den Flusskanal (2, 704) fließt, durch das Sorbens (6, 706) fließt.

**9.** Verfahren nach einem der Ansprüche 1 bis 8, **dadurch gekennzeichnet, dass** es umfasst, dass:

eine Fluidmischung (702) bei einer ersten Temperatur und einem ersten Druck in eine erste Sorptionsregion geleitet wird, wobei die erste Sorptionsregion ein erstes Sorbens enthält und wobei die Temperatur und der Druck in der ersten Sorptionsregion so ausgewählt werden, dass die Sorption der Fluidkomponente in das erste Sorbens in der ersten Sorptionsregion begünstigt wird; Wärme von der ersten Sorptionsregion in einen Mikrokanal-Wärmetauscher (10, 710) überführt wird und die Fluidkomponente von der besagten Fluidmischung selektiv entfernt wird, wodurch eine sorbierte Komponente im ersten Sorbens und eine Fluidmischung entstehen, wobei die Fluidmischung bezüglich der besagten Komponente relativ verarmt ist;

die Fluidmischung, die bezüglich der Komponente relativ verarmt ist, bei einer zweiten Temperatur und einem zweiten Druck in eine zweite Sorptionsregion geleitet wird, wobei die zweite Sorptionsregion ein zweites Sorbens enthält und wobei die Temperatur und der Druck in der zweiten Sorptionsregion so ausgewählt werden, dass die Sorption der Fluidkomponente in das Sorbens in der zweiten Sorptionsregion begünstigt wird; Wärme von der zweiten Sorptionsregion in einen Mikrokanal-Wärmetauscher (10, 710) übertragen wird und die Fluidkomponente von der besagten Fluidmischung, die an der Komponente relativ verarmt ist, selektiv entfernt wird, wodurch eine sorbierte Komponente im zweiten Sorbens und eine Gasmischung entstehen, wobei die Gasmischung bezüglich der Komponente stärker verarmt ist;

wobei die zweite Temperatur sich von der ersten Temperatur unterscheidet;

dem im Wesentlichen gesamten ersten Sorbens über einen Abstand von etwa 1 cm oder weniger Wärme zugeführt wird, um das erste Sorbens auf eine dritte Temperatur aufzuheizen und die besagte Komponente vom ersten Sorbens zu desorbieren;

dem im Wesentlichen gesamten zweiten Sorbens über einen Abstand von etwa 1 cm oder weniger Wärme zugeführt wird, um das zweite Sorbens auf eine vierte Temperatur aufzuheizen und die besagte Komponente vom zweiten Sorbens zu desorbieren; und

die Komponente erhalten wird, die vom ersten und zweiten Sorbens desorbiert wurde.

10. Verfahren nach Anspruch 9, **dadurch gekennzeichnet, dass** sich der zweite Druck vom ersten Druck unterscheidet.

11. Verfahren nach einem der Ansprüche 9 und 10, **dadurch gekennzeichnet, dass** das erste Sorbens ein poröses Sorbens ist.

12. Verfahren nach einem der Ansprüche 9 bis 11, **dadurch gekennzeichnet, dass** die Komponente, die vom ersten und zweiten Sorbens desorbiert wurde, in die erste Sorptionsregion zurückgeführt wird.

13. Verfahren nach einem der Ansprüche 9 bis 12, **dadurch gekennzeichnet, dass** die Fluidmischung (702) eine wasserstoffhaltige Gasmischung ist und die Fluidkomponente Wasserstoff ist.

14. Verfahren nach Anspruch 13, **dadurch gekennzeichnet, dass** der Fluss durch den Kanal so eingeschränkt ist, dass in mindestens einer Querschnittsfläche des Kanals der größte Abstand von einem beliebigen Punkt zu einer Kanalwand weniger als 0,5 cm beträgt; und wobei der Schritt der Sorption von Wasserstoffgas mit einer Rate von mindestens 0,01 mmol $H_2$/(Sekunde)(cm$^3$ Sorbens) durchgeführt wird.

15. Verfahren nach einem der Ansprüche 13 und 14, **dadurch gekennzeichnet, dass** das Sorbens eine Oberfläche aus Palladium oder aus einer Palladiumlegierung umfasst, die dem Gas ausgesetzt ist.

16. Verfahren nach einem der Ansprüche 13 bis 15, **dadurch gekennzeichnet, dass** der Wasserstoff nicht komprimiert erhalten wird.

17. Verfahren nach einem der Ansprüche 13 bis 16, **dadurch gekennzeichnet, dass** der zweite Schritt eine Temperaturerhöhung mit einer Rate von mindestens 100 °C pro Sekunde umfasst.

18. Verfahren nach Anspruch 17, **dadurch gekennzeichnet, dass** die Rate der Desorption im dritten Schritt unter Verwendung eines aufgeheizten Spülgases erhöht wird.

19. Verfahren nach einem der Ansprüche 13 bis 18, **dadurch gekennzeichnet, dass** dieses die Aufheizung über die Länge eines Kanals umfasst, um sorbiertes Gas auszutreiben, während am Anfang des Kanals Material zugeführt wird.

20. Verfahren nach Anspruch 19, **dadurch gekennzeichnet, dass** das Verfahren ein Produktgas erzeugt und das erhaltene Produktgas eine Wasserstoffreinheit aufweist, die mindestens 10 Mal größer als die der wasserstoffhaltige Gasmischung ist, und das Verfahren Wasserstoff mit einer Rate von mindestens 56,64 m$^3$ (2000 Standardkubikfuß) $H_2$ pro cm$^3$ Sorbens pro Tag erzeugt.

21. Verfahren nach einem der Ansprüche 13 bis 20, **dadurch gekennzeichnet, dass** der zweite und dritte Schritt zusammen 10 Sekunden oder weniger dauern und wobei mindestens 20 % des Wasserstoffs, der im ersten Schritt sorbiert wurde, vom Sorbens desorbiert wird.

22. Verfahren nach einem der Ansprüche 13 bis 21, **dadurch gekennzeichnet, dass** das Sorbens eine Schicht aus Pd umfasst, die ein Wasserstoffsorbens überlagert, um Wasserstoff selektiv im Sorbens zu sorbieren, und das Sorbens auf eine Temperatur gebracht wird, die mindestens 5 °C höher als die erste Temperatur ist, sodass der desorbierte Wasserstoff in einer höheren Reinheit als die Gasmischung erhalten wird.

23. Verfahren nach Anspruch 22, **dadurch gekennzeichnet, dass** der erste Schritt in einer ersten Stufe stattfindet und wobei der Wasserstoff, der im zweiten Schritt erhalten wird, in die erste Stufe zurückgeführt wird und der erste und zweite Schritt wiederholt werden.

24. Fluidtrennvorrichtung, **dadurch gekennzeichnet, dass** sie umfasst:

ein erstes Array von Flusskanälen (2, 704);
wobei das erste Array von Flusskanälen umfasst:

mindestens zwei Flusskanäle;
wobei jeder der mindestens zwei Flusskanäle einen Einlass, einen Auslass und ein Sorbens, das zwischen dem Einlass und dem Auslass angeordnet ist, umfasst;
wobei jeder der mindestens zwei Flusskanäle thermischen Kontakt mit einem Mikrokanal-Wärmetauscher (10, 710) hat;
wobei jeder der mindestens zwei Flusskanäle eine Höhe von 1 cm oder weniger hat, wobei die Höhe in Richtung eines Mikrokanal-Wärmetauschers zeigt; und
mindestens einen Arrayeinlass und mindestens einen Arrayauslass; und

ein zweites Array von Flusskanälen (2, 704);
wobei das zweite Array von Flusskanälen umfasst:

mindestens zwei Flusskanäle;
wobei jeder der mindestens zwei Flusskanäle einen Einlass, einen Auslass und ein Sorbens, das zwischen dem Einlass und dem Auslass angeordnet ist, umfasst;
wobei jeder der mindestens zwei Flusskanäle thermischen Kontakt mit einem Mikrokanal-Wärmetauscher (10, 710) hat;
wobei jeder der mindestens zwei Flusskanäle eine Höhe von 1 cm oder weniger hat, wobei die Höhe in Richtung eines Mikrokanal-Wärmetauschers zeigt; und
mindestens einen Arrayeinlass und mindestens einen Arrayauslass;

mindestens eine Fluidleitung, die den Auslass der ersten Anordnung mit dem Einlass der zweiten Anordnung verbindet; und
ein Ventil, dass in der Lage ist, den Fluss durch die Leitung zu steuern.

25. Vorrichtung nach Anspruch 24, **dadurch gekennzeichnet, dass** der mindestens eine Anordnungseinlass in der ersten Anordnung der gleiche Einlass ist wie der Flusskanaleinlass in der ersten Anordnung.

26. Vorrichtung nach Anspruch 24 oder 25 zur Trennung von Wasserstoff von einer wasserstoffhaltigen Gasmischung nach Anspruch 13, **dadurch gekennzeichnet, dass** die Vorrichtung darüber hinaus umfasst:

einen Flusskanal, der eine innere Oberfläche hat, die in mindestens einem Teil der inneren Oberfläche Palladium umfasst.

27. Vorrichtung nach Anspruch 26, **dadurch gekennzeichnet, dass** diese an einer Wand des Flusskanals eine Sorbensschicht umfasst und darüber hinaus einen offenen Kanal innerhalb des Flusskanals umfasst.

28. Vorrichtung nach Anspruch 27, **dadurch gekennzeichnet, dass** der offene Kanal eine Höhe von 0,1 mm oder weniger aufweist.

29. Vorrichtung nach Anspruch 28, **dadurch gekennzeichnet, dass** diese innerhalb des Flusskanals eine poröse, monolithische Sorbenseinlage umfasst, wobei die innere Oberfläche die Oberfläche des porösen Sorbens umfasst.

30. Vorrichtung nach Anspruch 29, **dadurch gekennzeichnet, dass** das poröse Sorbens einen wärmeleitenden Filz oder einen wärmeleitenden durchgehenden porösen Schaumstoff umfasst.

31. Vorrichtung nach einem der Ansprüche 29 und 30, **dadurch gekennzeichnet, dass** das poröse Sorbens den Flusskanal im Wesentlichen ausfüllt.

32. Vorrichtung nach einem der Ansprüche 26 bis 31, **dadurch gekennzeichnet, dass** das Palladium eine Palladium-Silber-Legierung ist.

33. Vorrichtung nach einem der Ansprüche 26 bis 32, **dadurch gekennzeichnet, dass** diese umfasst:

mindestens vier Schichten, wobei jede der besagten mindestens vier Schichten einen Mikrokanal-Wärmetauscher umfasst; abwechselnd mit
mindestens drei Schichten, wobei jede der besagten mindestens drei Schichten mindestens einen Flusskanal umfasst.

34. Vorrichtung nach einem der Ansprüche 26 bis 33, **dadurch gekennzeichnet, dass** das Sorbens ein Wasserstoffsorbens umfasst, das über mehr als 90 % der Oberfläche des Wasserstoffsorbens eine Oberflächenbeschichtung aufweist, wobei die Oberflächenbeschichtung Palladium umfasst und wobei das Sorbens eine Dicke von 0,0001 bis 1 mm hat.

35. Vorrichtung nach einem der Ansprüche 26 bis 34, **dadurch gekennzeichnet, dass** das Sorbens einen Promoter auf der Oberfläche des Sorbens umfasst.

36. Vorrichtung nach einem der Ansprüche 26 bis 35, **dadurch gekennzeichnet, dass** sie mindestens einen ersten Gaseinlass zu ersten mindestens drei Schichten umfasst, wobei jede Schicht mindestens einen Flusskanal umfasst; mindestens einen ersten Gasauslass von den besagten ersten mindestens drei Schichten, die mindestens einen Flusskanal umfassen;
wobei dieser mindestens eine besagte erste Gasauslass mit mindestens einem zweiten Gaseinlass an zweiten mindestens drei Schichten verbunden ist, die mindestens einen Flusskanal umfassen;
mindestens einen zweiten Gasauslass von den besagten zweiten mindestens drei Schichten, wobei jede Schicht mindestens einen Flusskanal umfasst; und darüber hinaus umfasst
einen ersten Satz von mindestens vier Schichten, die sich mit den besagten ersten mindestens drei Schichten abwechseln, wobei jede der besagten ersten mindestens vier Schichten einen Mikrokanal-Wärmetauscher umfasst; und
einen zweiten Satz von mindestens vier Schichten, die sich mit den zweiten mindestens drei Schichten abwechseln, wobei jede der besagten zweiten mindestens vier Schichten einen Mikrokanal-Wärmetauscher umfasst.

37. Vorrichtung nach Anspruch 24, bei der die Flusskanäle über ein Ventil in Fluidkontakt mit einem komponentenverarmten Fluidkanal und einem komponentenreichen Fluidkanal stehen.

38. Vorrichtung nach Anspruch 26, bei der der Flusskanal über ein Ventil in Fluidkontakt mit einem komponentenverarmten Fluidkanal und einem komponentenreichen Fluidkanal steht.

39. Verfahren zur Verwendung der Vorrichtung nach einem der Ansprüche 24 und 25, das umfasst:

die Sorption einer Fluidkomponente in der ersten Anordnung und
gleichzeitig
die Desorption einer Fluidkomponente in der zweiten Anordnung.

40. Verwendung der Vorrichtung nach einem der Ansprüche 26 bis 38, um Wasserstoff von einer wasserstoffhaltigen Gasmischung zu reinigen.

**Revendications**

1. Procédé pour séparer un constituant fluide d'un mélange de fluides, comprenant :

   une première étape consistant à adsorber ou absorber un constituant fluide, cette première étape consistant à introduire un mélange de fluides (702) dans un canal de circulation (2, 704) à une première température ; dans lequel le canal de circulation (2, 704) comprend un sorbant (6, 706) situé dans le canal, le mélange de fluides (702) entrant en contact avec le sorbant (6, 706) sans passer à travers un contacteur, et dans lequel le canal de circulation (2, 704) a une direction longitudinale orientée comme la direction nette de l'écoulement du mélange de fluides (702) dans le canal de circulation (2, 704), d'une entrée à une sortie, et dans lequel le canal de circulation (2, 704) a une hauteur de 1 cm ou moins ; et à transmettre de la chaleur du sorbant (6, 706) à un échangeur de chaleur à microcanaux (10, 710) en contact thermique avec ledit canal de circulation (2, 704) ; une deuxième étape consistant à augmenter la température de la surface (8) du sorbant, cette deuxième étape consistant à ajouter de l'énergie issue d'une source d'énergie ; et une troisième étape consistant à désorber un constituant fluide du sorbant (6, 706) à une deuxième température et à obtenir un constituant fluide qui a été adsorbé ou absorbé dans la première étape, dans laquelle la deuxième température est plus élevée que la première température.

2. Procédé selon la revendication 1, **caractérisé en ce que** le canal de circulation (2, 704) a une surface exposée au mélange de fluides (702) et possède le sorbant (6, 706) sur au moins une partie de la surface.

3. Procédé selon une quelconque des revendications 1 à 2, **caractérisé en ce que** les deuxième et troisième étapes se produisent simultanément.

4. Procédé selon une quelconque des revendications 1 à 3, **caractérisé en ce qu'**il comprend en outre une étape, qui suit la troisième étape, consistant à transférer de la chaleur du canal de circulation (2, 704) dans un échangeur de chaleur à microcanaux (10, 710).

5. Procédé selon une quelconque des revendications 1 à 4, **caractérisé en ce que** les trois étapes sont répétées sur de multiples cycles, dans lequel chaque cycle prend moins de 10 secondes pour une solution gazeuse, ou moins de 1000 secondes pour une solution liquide.

6. Procédé selon une quelconque des revendications 1 à 5, **caractérisé en ce que** ledit sorbant (6, 706) est un insert poreux monolithique.

7. Procédé selon une quelconque des revendications 1 à 6, **caractérisé en ce que** les première et deuxième étapes, combinées, prennent 10 secondes ou moins pour un mélange de fluides non condensé, et où au moins 20 % du composant gazeux adsorbé ou absorbé dans la première étape sont désorbés du sorbant (6, 706) ; ou prennent 1000 secondes ou moins pour un mélange liquide, et où au moins 20 % du constituant fluide adsorbé ou absorbé dans la première étape sont désorbés du sorbant (6, 706).

8. Procédé selon la revendication 7, **caractérisé en ce que**, lorsque sensiblement tout le fluide qui circule dans le canal de circulation (2, 704) circule à travers le sorbant (6, 706), le sorbant (6, 706) est poreux.

9. Procédé selon une quelconque des revendications 1 à 8, **caractérisé en ce qu'**il consiste à :

   introduire un mélange de fluides (702) dans une première région de sorption à une première température et une première pression, où la première région de sorption comprend un premier sorbant et où la température et la pression dans la première région de sorption sont sélectionnées pour favoriser la sorption du constituant fluide dans le premier sorbant dans la première région de sorption ; transférer de la chaleur de la première région de sorption dans un échangeur de chaleur à microcanaux (10, 710) et extraire sélectivement le constituant fluide dudit mélange de fluides, en obtenant comme résultat un constituant adsorbé ou absorbé dans le premier sorbant et un mélange de fluides qui est relativement épuisé en ledit constituant ; introduire le mélange de fluides relativement épuisé en constituant dans une deuxième région de sorption à une deuxième température et à une deuxième pression, où la deuxième région de sorption comprend un deuxième sorbant et où la température et la pression dans la deuxième région de sorption sont sélectionnées pour favoriser la sorption du constituant fluide dans le sorbant dans la deuxième région de sorption ; transférer de la chaleur de la deuxième région de sorption dans un échangeur de chaleur à microcanaux (10, 710) et extraire sélectivement le constituant fluide dudit mélange de fluides relativement épuisé en constituant, en obtenant comme résultat du constituant adsorbé ou absorbé dans le deuxième sorbant et un mélange gazeux relativement plus épuisé en constituant ;

où la deuxième température est différente de la première température ;

ajouter de la chaleur au premier sorbant, sur une distance d'environ 1 cm ou moins à sensiblement tout le premier sorbant, pour porter le premier sorbant à une troisème température, et désorber ledit constituant du premier sorbant ;

ajouter de la chaleur au deuxième sorbant, sur une distance d'environ 1 cm ou moins, à sensiblement tout le deuxième sorbant, pour porter le deuxième sorbant à une quatrième température, et désorber ledit constituant dudit deuxième sorbant ; et

obtenir le constituant désorbé des premier et deuxième sorbants.

**10.** Procédé selon la revendication 9, **caractérisé en ce que** la deuxième pression est différente de la première pression.

**11.** Procédé selon une quelconque des revendications 9 et 10, **caractérisé en ce que** le premier sorbant est un sorbant poreux.

**12.** Procédé selon une quelconque des revendications 9 à 11, **caractérisé en ce que** le constituant désorbé des premier et deuxième sorbants est recyclé à la première région de sorption.

**13.** Procédé selon une quelconque des revendications 9 à 12, **caractérisé en ce que** le mélange de fluides (702) est un mélange de gaz contenant de l'hydrogène, et le constituant fluide est de l'hydrogène.

**14.** Procédé selon la revendication 13, **caractérisé en ce que** la circulation dans le canal est limitée de telle manière que, dans au moins une zone de section transversale du canal, la plus grande distance entre un point quelconque et une paroi du canal soit inférieure à 0,5 cm ; et où l'étape consistant à adsorber ou absorber du gaz hydrogène est exécutée à une cadence d'au moins 0,01 mmole de $H_2$ /(seconde)(cm$^3$ de sorbant).

**15.** Procédé selon une quelconque des revendications 13 et 14, **caractérisé en ce que** le sorbant comprend une surface de palladium ou d'un alliage de palladium qui est exposée à un gaz.

**16.** Procédé selon une quelconque des revendications 13 à 15, **caractérisé en ce que** l'hydrogène obtenu n'est pas comprimé.

**17.** Procédé selon une quelconque des revendications 13 à 16, **caractérisé en ce que** la deuxième étape comprend une élévation de la température à une cadence d'au moins 100°C par seconde.

**18.** Procédé selon la revendication 17, **caractérisé en ce que** la cadence de désorption dans la troisième étape est augmentée par l'utilisation d'un gaz de balayage chauffé.

**19.** Procédé selon une quelconque des revendications 13 à 18, **caractérisé en ce qu'**il consiste à chauffer sur la longueur d'un canal pour expulser la gaz adsorbé ou absorbé en même temps qu'on introduit une alimentation dans le début du canal.

**20.** Procédé selon la revendication 19, **caractérisé en ce que** le procédé produit un gaz produit et le gaz produit obtenu possède une pureté de l'hydrogène au moins 10 fois plus grande que le mélange de gaz contenant de l'hydrogène, et le procédé produit de l'hydrogène à une cadence d'au moins 56,64 m$^3$ (2000 scf) de $H_2$ par cm$^3$ de sorbant par jour.

**21.** Procédé selon une quelconque des revendications 13 à 20, **caractérisé en ce que** les deuxième et troisième étapes, combinées, prennent 10 secondes ou moins et

dans lequel au moins 20 % de l'hydrogène adsorbé ou absorbé dans la première étape sont désorbés du sorbant.

**22.** Procédé selon une quelconque des revendications 13 à 21, **caractérisé en ce que** le sorbant comprend une couche de Pd qui recouvre un sorbant de l'hydrogène pour adsorber ou absorber sélectivement de l'hydrogène dans le sorbant, et le sorbant est porté à une température supérieure d'au moins 5°C à la première température, de sorte que l'hydrogène désorbé est obtenu sous une forme ayant une plus haute pureté que le mélange gazeux.

**23.** Procédé selon la revendication 22, **caractérisé en ce que** la première étape se produit dans un premier étage, et où l'hydrogène obtenu issu de la deuxième étape est recyclé dans le premier étage, et les première et deuxième étapes sont répétées.

**24.** Dispositif de séparation de fluides, **caractérisé en ce qu'**il comprend :

une première rangée de canaux de circulation (2, 704) ;
la première rangée de canaux de circulation comprenant :

au moins deux canaux de circulation ;
chacun des au moins deux canaux de circulation comprenant une entrée, une sortie et un sorbant disposé entre l'entrée et la sortie ;
chacun des au moins deux canaux de circulation étant en contact thermique avec un échangeur de chaleur à microcanaux (10, 710) ;
chacun des au moins deux canaux de circulation ayant une hauteur de 1 cm ou moins, où la hauteur est considérée dans une direction orientée vers un échangeur de chaleur à microcanaux ; et
au moins une entrée de la rangée et au moins une sortie de la rangée : et

une deuxième rangée de canaux de circulation (2, 704) ;
la deuxième rangée de canaux de circulation comprenant :

au moins deux canaux de circulation ;
chacun des au moins deux canaux de circulation comprenant une entrée, une sortie et un sorbant disposé entre l'entrée et la sortie ;
chacun des au moins deux canaux de circulation étant en contact thermique avec un échangeur de chaleur à microcanaux (10, 710) ;
chacun des au moins deux canaux de circulation ayant une hauteur de 1 cm ou moins, où la hauteur est considérée dans une direction orientée vers un échangeur de chaleur à microcanaux ; et
au moins une entrée de la rangée et au moins une sortie de la rangée ;

au moins un conduit de fluide reliant la sortie de la première rangée à l'entrée de la deuxième rangée ; et
une vanne capable de commander la circulation dans le conduit.

**25.** Dispositif selon la revendication 24, **caractérisé en ce que** l'au moins une entrée de rangée située dans la première rangée est la même entrée qu'une entrée de canal de circulation située dans la première rangée.

**26.** Dispositif selon la revendication 24 ou 25 destiné à exécuter la séparation de l'hydrogène d'un mélange de gaz contenant de l'hydrogène selon la revendication 13, **caractérisé en ce que** le dispositif comprend en outre :

un canal de circulation ayant une surface interne qui comprend du palladium sur au moins une partie de la surface interne.

**27.** Dispositif selon la revendication 26, **caractérisé en ce qu'**il comprend une couche de sorbant sur une paroi du canal de circulation et comprenant en outre un canal ouvert dans le canal de circulation.

**28.** Dispositif selon la revendication 27, **caractérisé en ce que** le canal ouvert a une hauteur de 0,1 mm ou moins.

**29.** Dispositif selon la revendication 28, **caractérisé en ce qu'**il comprend un insert monolithique de sorbant poreux dans le canal de circulation et où la surface interne comprend la surface du sorbant poreux.

**30.** Dispositif selon la revendication 29, **caractérisé en ce que** le sorbant poreux comprend un feutre thermoconducteur ou une mousse continuellement poreuse thermoconductrice.

**31.** Dispositif selon une quelconque des revendications 29 et 30, **caractérisé en ce que** le sorbant poreux remplit sensiblement le canal de circulation.

**32.** Dispositif selon une quelconque des revendications 26 à 31, **caractérisé en ce que** le palladium est un alliage palladium-argent.

**33.** Dispositif selon une quelconque des revendications 26 à 32, **caractérisé en ce qu'**il comprend : au moins quatre couches, chacune desdites au moins quatre couches comprenant un échangeur de chaleur à microcanaux ; en alternance avec
au moins trois couches comprenant au moins un canal de circulation dans chacun desdites au moins trois couches.

**34.** Dispositif selon une quelconque des revendication 26 à 33, **caractérisé en ce que** le sorbant comprend un sorbant de l'hydrogène ayant un revêtement superficiel sur au moins 90 % de la surface du sorbant de l'hydrogène, où le revêtement superficiel comprend du palladium et où le sorbant a une épaisseur de 0,0001 à 1 mm.

**35.** Dispositif selon une quelconque des revendications 26 à 34, **caractérisé en ce que** le sorbant comprend un promoteur sur la surface du sorbant.

**36.** Dispositif selon une quelconque des revendications 26 à 35, **caractérisé en ce qu'**il comprend au moins une première entrée de gaz donnant sur un premier ensemble d'au moins trois couches, où chaque couche comprend au moins un canal de circulation ;
au moins une première sortie de gaz partant dudit ensemble d'au moins trois couches comprenant au moins un canal de circulation ;
ladite au moins une première sortie de gaz raccordée à au moins une deuxième entrée de gaz donnant dans un deuxième ensemble d'au moins trois couches comprenant au moins un canal de circulation ;
au moins une deuxième sortie de gaz partant dudit deuxième ensemble d'au moins trois couches, où chaque couche comprend au moins un canal de circulation ; et comprenant en outre
un premier ensemble d'au moins quatre couches en alternance avec ledit premier ensemble d'au moins trois couches, chacun desdits ensembles d'au moins quatre premières couches comprenant un échangeur de chaleur à microcanaux ; et
un deuxième ensemble d'au moins quatre couches en alternance avec ledit deuxième ensemble d'au moins trois couches, chacun desdits deuxièmes ensembles d'au moins quatre couches comprenant un échangeur de chaleur à microcanaux.

**37.** Dispositif selon la revendication 24, **caractérisé en ce que** les canaux de circulation sont en communication fluidique avec un canal de fluide épuisé en constituant et un canal de fluide riche en constituant par une vanne.

**38.** Dispositif selon la revendication 26, **caractérisé en ce que** le canal de circulation est en communication fluidique avec un canal de fluide épuisé en constituant et avec un canal de fluide riche en constituant par une vanne.

**39.** Procédé d'utilisation du dispositif selon une quelconque des revendications 24 et 25, comprenant les phases consistant à :

adsorber ou absorber un constituant fluide dans une première rangée et, simultanément,
désorber un constituant fluide dans la deuxième rangée.

**40.** Utilisation du dispositif de l'une quelconque des revendications 26 à 38, pour purifier de l'hydrogène issu d'un mélange de gaz contenant de l'hydrogène.

FIG. 1

FIG. 2

FEED STREAM

HOT/COLD STREAM
(CYCLED AT FIXED RATE)

• • •                                    • • •

## FIG. 3a

H2 RICH STREAM

H2 DEPLETED EFFLUENT

DIRECTION
OF SORBATE
CONVECTIVE
FLOW, ADJACENT
NOT THROUGH
SORBENT

## FIG. 3b

DIRECTION OF SORBATE
DIFFUSION (NOT CONVECTION)
WITHIN SORBENT

FEED STREAM

HOT/COLD STREAM
CYCLED

· · ·          · · ·

FIG. 4a

H2 RICH STREAM

H2 DEPLETED EFFLUENT

FIG. 4b

FIG. 5(a)

FIG. 5(b)

FIG. 5(c)

FIG. 5(d)

FIG. 5(e)

FIG. 5(f)

FIG. 5(g)

FIG. 5(h)

FIG. 5(i)

FIG. 5(j)

FIG. 6(a)

FIG. 6(b)

FIG. 6(c)

FIG. 6(d)

FIG. 6(e)

FIG. 6(f)

**FIG. 7**

**FIRST CYCLE**

$t_n < t < t_{n+1}$ MID CYCLE

SORPTION CLEAN UP DESORPTION

**FIG. 9a**

FEED

$t = t_{n+1}$ END OF CYCLE; IMMEDIATELY PRIOR TO FEED SWITCH

SORPTION CLEAN UP DESORPTION

MIXED A+B STREAM

A STREAM (WEAKLY SORBED)

B STREAM (STRONGLY SORBED)

FIG. 8

FEED GAS

50% H2
_____ N2
_____ CO2
_____ CO
_____ H20
T = ___?__C
P = ___?__atm

FLOW COLLECTOR

STAGE I    STAGE II    STAGE III

DESORPTION CYCLE    SORPTION CYCLE

DESORPTION CYCLE    SORPTION CYCLE

DESORPTION CYCLE    SORPTION CYCLE

HEAT    HEAT    HEAT

FLOW DISTRIBUTOR

BY-PRODUCT GAS

0.1-0.01% H2
_____ N2
_____ CO2
_____ CO
_____ H20
T = ?  C
P = ?  atm

PRODUCT GAS

99.99% H2
_____ ppm N2
_____ ppm CO2
_____ ppm CO
_____ ppm H20
T = ?  C

EP 1 392 414 B1

FEED    PURGE

$t_n < t < t_{n+1}$

MID CYCLE

DESORPTION    SORPTION    CLEAN UP

FEED

$t = t_{n+1}$

END OF CYCLE;
IMMEDIATELY PRIOR
TO FEED SWITCH

DESORPTION    SORPTION    CLEAN UP

MIXED A+B STREAM

A STREAM (WEAKLY SORBED)

B STREAM (STRONGLY SORBED)

## FIG. 9b

PURGE    FEED

$t_n < t < t_{n+1}$

MID CYCLE

CLEAN UP    DESORPTION    SORPTION

FEED

$t = t_{n+1}$

END OF CYCLE;
IMMEDIATELY PRIOR
TO FEED SWITCH

CLEAN UP    DESORPTION    SORPTION

MIXED A+B STREAM

A STREAM (WEAKLY SORBED)

B STREAM (STRONGLY SORBED)

## FIG. 9c

EP 1 392 414 B1

FIG. 10a

FIG. 10b

WATER AT 90° C

WATER AT 5° C

PART OF STRONGLY SORBED
PRODUCT STREAM RECYCLED
TO SWEEP OUT PRODUCT

FEED STREAM

SORPTION
STAGE

DESORPTION
STAGE

RECYCLE WATER TO
5°C RESERVOIR;
COOL AS NEEDED

RECYCLE WATER TO
90°C RESERVOIR;
HEAT AS NEEDED

STRONGLY SORBED
PRODUCT EFFLUENT

FEED (DEPLETED IN PRODUCT)

FIG. 11

HEx FLUID

FIG. 12

47

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6126723 A
- WO 0112312 A2
- WO 0075950 A1
- WO 0103812 A1
- US 5750026 A
- US 6174049 B
- US 4849774 B


**Non-patent literature cited in the description**

- **Greenwood et al.** *Chemistry of the Elements,* 1984